# FASCICULE DE BREVET EUROPEEN

(11) **EP 1 239 735 B1**
(45) Date de publication et mention de la délivrance du brevet: **15.09.2004**
(21) Numéro de dépôt: 00990070.5
(22) Date de dépôt: 20.12.2000
(51) Int. Cl.: A01N 65/00

(54) **UTILISATION DE DECHETS OU D'EXTRAITS DE BOIS EN TANT QU'INSECTICIDE**
VERWENDUNG VON HOLZABFALLPRODUKTEN ODER HOLZEXTRAKTEN ALS INSEKTIZID
USE OF WOOD WASTE OR EXTRACTS AS INSECTICIDE

(30) Priorité: 23.12.1999 FR 9916408
(43) Date de publication de la demande: 18.09.2002
(73) Titulaire: Centre National De La Recherche Scientifique, 75794 Paris Cedex 16 (FR); CENTRE DE COOPERATION INTERNATIONALE EN RECHERCHE AGRONOMIQUE POUR LE DEVELOPPEMENT (C.I.R.A.D.), 75116 Paris (FR)
(72) Inventeur: CLEMENT, Jean-Luc, F-13008 Marseille (FR); ROBERT, Sylvie, F-13006 Marseille (FR); FOUQUET, Daniel, F-34820 Assas (FR); ZAREMSKI, Alba, 34170 Castelnau le Lez (FR)
(74) Mandataire: Grosset-Fournier, Chantal Catherine
(86) Numéro de dépôt international: PCT/FR2000/003601
(87) Numéro de publication internationale: WO 2001/047361

(56) Documents cités:
- DATABASE WPI Section Ch, Week 198621 Derwent Publications Ltd., London, GB; Class C03, AN 1986-133790 XP002147642 & JP 61 069703 A (KOZU M), 10 avril 1986 (1986-04-10)
- DATABASE BIOSIS [en ligne] BIOSCIENCES INFORMATION SERVICE, PHILADELPHIA, PA, US; A.A.D.MORAIS ET AL.: "Essential oils of aniba-spp" retrieved from EPOQUE, accession no. PREV197457018254 XP002147639 & ACTA AMAZONICA, vol. 2, no. 1, 1972, pages 41-44,
- "Forest Products *** Natural termit-repellents from tropical trees" LE CIRAD, [en ligne] XP002169180 Extrait de l'Internet: <URL:http://www.cirad.fr/presentation/en/c irad00/c2/depa/fo_3.htm> [extrait le 2001-06-08] & CIRAD 1999, 2000, Montpellier, FR
- DATABASE BIOSIS [en ligne] BIOSCIENCES INFORMATION SERVICE, PHILADELPHIA, PA, US; F.L.CARTER ET AL.: "RESPONSES OF COPTOTERMES-FORMOSANUS TO EXTRACTS FROM 5 BRAZILIAN HARDWOODS" retrieved from EPOQUE, accession no. PREV198376049848 XP002147638 & ZEITSCHRIFT FÜR ANGEWANDTE ENTOMOLOGIE, vol. 95, no. 1, 1983, pages 5-14,
- DATABASE CROPU [en ligne] H.WEIDNER: "Neuere Literatur über einige Probleme in der angewandten Termitenkunde" retrieved from STN-INTERNATIONAL, accession no. 1987-82782 CROPU XP002147640 & Z.PFLANZENKR.PFLANZENSCHUTZ, vol. 93, no. 6, 1986, pages 642-662,
- DATABASE CROPU [en ligne] C.A.GONZALEZ: "Antifeedant and insecticidal activity of endemic Canarian Lauraceae" retrieved from STN-INTERNATIONAL, accession no. 1994-85299 CROPU XP002147641 & APPL.ENTOMOL.ZOOL., vol. 29, no. 2, 1994, pages 292-296,
- DATABASE WPI Section Ch, Week 198250 Derwent Publications Ltd., London, GB; Class A97, AN 1982-07774J XP002147643 & JP 57 179105 A (SANKEI CHEMICAL KK), 4 novembre 1982 (1982-11-04)
- DATABASE WPI Section Ch, Week 199711 Derwent Publications Ltd., London, GB; Class C05, AN 1997-115169 XP002147644 & JP 09 002913 A (MITSUI NORIN KK), 7 janvier 1997 (1997-01-07)
- DATABASE WPI Section Ch, Week 198927 Derwent Publications Ltd., London, GB; Class C03, AN 1989-195610 XP002147645 & JP 01 132505 A (MIKASA KAGAKU KOGYO KK), 25 mai 1989 (1989-05-25)

## Description

La présente invention a pour objet l'utilisation de déchets ou d'extraits de bois, en tant qu'insecticide, et notamment pour lutter contre les insectes xylophages, tels que les termites.

La nature destructrice des termites qui ingèrent le bois de matériaux de construction, et des structures les plus diverses, est un fléau bien connu.

De nombreux travaux ont été réalisés pour la recherche de méthodes de lutte contre les termites. Parmi les produits chimiques les plus utilisés à titre d'insecticide, on peut citer les organo-chlorés, les organo-phosphorés et les pyréthrinoïdes de synthèse.

Le brevet français FR 2 742 024 a pour objet un procédé de destruction de termitières, consistant à placer à proximité de la termitière des appâts constitués d'un support contenant du flufénoxuron ou ses dérivés actifs.

Le brevet français FR 2 563 696 a pour objet des compositions insecticides, notamment termicides, à base de dérivés 2,5 disubstitués de la pyrrolidine et/ou de la pyrroline-1.

Depuis l'interdiction de l'utilisation de certains organochlorés et organophosphorés utilisés traditionnellement, le marché de la lutte contre les termites est en pleine expansion. Avec la mise en application de dispositions européennes, les interdictions d'utiliser des produits chimiques nocifs pour l'environnement vont encore s'accroître. Ces interdictions sont également renforcées par les consommateurs qui privilégient les moyens plus respectueux de l'environnement, tels que les pièges, les antiappétants, les régulateurs de croissance etc ...

Le brevet européen EP 587 116 a pour objet un système de détection et de contrôle des termites à l'aide d'un piège souterrain, ledit système permettant de déterminer l'étendue de l'infection causée par les termites, et le cas échéant, de contrôler ladite infection. Le système décrit dans cette référence permet de détecter l'activité des termites avant d'appliquer un pesticide, et ensuite d'appliquer un pesticide en des endroits bien localisés.

La demande internationale WO 93/23998 a pour objet des matrices contenant un produit toxique, et des dispositifs pour contrôler l'activité des insectes nuisibles tels que les termites. Selon cette référence, l'introduction de produits chimiques nocifs dans l'environnement est réduite par l'utilisation de petites quantités de produits toxiques.

Cependant dans les pièges décrits dans ces références, seule une faible biodégradation des molécules chimiques de synthèse est observée. De plus, ces pièges présentent un manque d'efficacité pour certaines espèces de termites, et notamment pour les espèces des zones tropicales.

D'autres molécules chimiques décrites à ce jour, destinées à lutter contre les termites sont uniquement des inhibiteurs de la synthèse de la chitine, empêchant ainsi les termites de muer (régulateurs de croissance), mais ne présentent pas d'autres effets vis-à-vis des termites, tels que des effets répulsifs ou antiappétants.

Par ailleurs, un insecticide est particulièrement intéressant lorsqu'il présente à la fois des effets de toxicité, d'antiappétance et de répulsivité vis-à-vis des insectes nuisibles. Or, la plupart des insecticides existants à ce jour, notamment les insecticides chimiques, présentent seulement un ou deux des trois effets susmentionnés.

L'un des buts de l'invention est de fournir des insecticides plus respectueux de l'environnement par rapport aux insecticides chimiques traditionnels.

L'un des autres buts de l'invention est de fournir un moyen de lutte contre les termites permettant de préserver l'environnement, et présentant notamment des effets antiappétant, toxique et répulsif contre les termites.

La présente invention résulte de la mise en évidence par les Inventeurs du fait que les bois du genre *Aniba,* et notamment de l'espèce *parviflora* (*Aniba parviflora*), qui est un arbre d'Amérique du Sud, et notamment de Guyane, et qui est utilisé dans l'industrie cosmétique, pouvait avoir des propriétés insecticides, et notamment contre les insectes xylophages.

A cet égard, la présente invention a pour objet l'utilisation de bois du genre *Aniba,* et notamment de l'espèce *parviflora* (*Aniba parviflora*), en tant qu'insecticide.

Dans ce qui suit, le bois du genre *Aniba* et de l'espèce *parviflora* (*Aniba parviflora*) pourra être désigné par le nom commun « bois de rose ».

D'autres bois du genre *Aniba* pouvant être utilisés dans le cadre de l'invention sont notamment ceux de l'espèce *rosaedora* (*Aniba rosaedora*) ou de l'espèce *duckei* (*Aniba duckei*).

Selon un mode de réalisation avantageux de l'invention, le bois du genre *Aniba* est associé à un agent de charge n'affectant pas les propriétés insecticides des bois du genre *Aniba*.

Selon un autre mode de réalisation avantageux de l'invention, l'agent de charge améliore l'effet répulsif des bois du genre *Aniba.*

Selon un autre mode de réalisation avantageux de l'invention, l'agent de charge peut permettre d'améliorer l'effet toxique et antiappétant des bois du genre *Aniba*.

L'agent de charge utilisé dans le cadre de la présente invention est un bois du genre *Ocotea,* et notamment de l'espèce *rubra* (*Ocotea rubra*).

Outre l'avantage de ne pas affecter les propriétés insecticides des bois du genre *Aniba*, et notamment d'améliorer leurs effets répulsifs, l'utilisation d'*Ocotea rubra* en tant qu'agent de charge présente de nombreux autres avantages. En effet, les études effectuées sur *Ocotea rubra* ont montré que ce bois présente à lui seul des propriétés insecticides. De plus, l'utilisation d'*Ocotea rubra* en tant qu'agent de charge permet avantageusement d'utiliser *Aniba parviflora* en quantité moindre par rapport à celle devant être utilisée dans le cas où *Aniba parviflora* est utilisé seul, c'est-à-dire sans être associé à *Ocotea rubra*. A titre d'exemple, l'utilisation d'*Ocotea rubra* en association avec *Aniba parviflora*, permet d'utiliser environ 10% à environ 90%, et notamment environ 60% à environ 90% en moins d'*Aniba parviflora* que si ce dernier était utilisé seul en tant qu'insecticide. *Ocotea rubra* présente également l'avantage d'être un bois qui n'est pas cher, qui est très utilisé dans le milieu industriel (meubles, charpentes etc...) et ainsi permet d'obtenir facilement des copeaux, qui est très répandu dans toutes les zones tropicales, qui est très reconnaissable par sa couleur caractéristique rose saumon et facilement identifiable en forêt par son écorce épaisse.

Dans ce qui suit, le bois du genre *Ocotea* et de l'espèce *rubra* (*Ocotea rubra*) pourra encore être désigné par le nom commun « grignon ».

Selon un mode de réalisation avantageux de l'invention, le bois est utilisé sous la forme de sous-produits de sciage tels que morceaux, copeaux, poudres et/ou sciures de bois.

Par « sous-produits de sciage » on entend les déchets de bois obtenus après sciage du bois tels que les morceaux, copeaux, poudres et/ou sciures de bois. Lesdits sous-produits de sciage de bois pourront encore être désignés dans ce qui suit par le terme « essence de bois ».

Par « morceaux de bois » on entend des parties ou parcelles de bois présentant une taille allant d'environ 0,5 cm à environ 15 cm d'épaisseur, d'environ 5 cm à environ 200 cm de longueur, et d'environ 4 cm à environ 20 cm de largeur par morceau.

Par « copeaux de bois » on entend des parcelles de bois de taille plus petite que les morceaux de bois, allant d'environ 0,5 mm à 5 mm d'épaisseur, d'environ 0,5 cm à environ 5 cm de longueur, et d'environ 0,5 cm à environ 4 cm de largeur par copeau.

Par « sciures de bois » on entend des particules de bois présentant une taille allant d'environ 1 mm à environ 5 mm.

Par « poudres de bois » on entend des particules de bois de taille plus fine que celles des sciures de bois, allant d'environ 0,2 mm à environ 1 mm.

Selon un autre mode de réalisation avantageux de l'invention, le bois est utilisé sous la forme d'au moins un extrait de bois dans un solvant polaire ou non polaire ou un mélange de solvants.

Par « solvant polaire », il faut comprendre tout solvant présentant une polarité allant de 3,5 à 9, ladite polarité étant établie selon les normes définies dans « Godfrey, Norman B., « Solvent Selection via Miscibility Number », CHEMTECH, 359-363 (1972) », et notamment choisi dans le groupe constitué par :
- les alcools ayant de 1 à 8 atomes de carbone, tels que l'éthanol, le propanol, le butanol, l'alcool benzylique, le méthoxyéthanol ou leurs mélanges, et notamment le méthanol,
- les cétones ayant de 1 à 7 atomes de carbone, et notamment l'acétone, la méthyle éthyle cétone, le cyclohexanone ou leurs mélanges,
- les acétates d'alkyle ayant de 1 à 6 atomes de carbone, et notamment les acétates de méthyle et d'éthyle ou leurs mélangés,
- le chlorure d'éthylène, le tétrahydrofuranne (THF), le nitrobenzène, le benzonitrile, le p-dioxane, la pyridine, le nitroéthane, l'acétonitrile, l'acide acétique, le diméthylformamide (DMF), le diméthylsulfoxyde (DMSO), le formamide, l'eau ou leurs mélanges,
- ou un mélange d'au moins deux des susdits solvants.

Parmi les solvants non polaires pouvant être utilisés selon l'invention, on peut notamment citer le pentane, le dichlorométhane, le benzène, l'hexane, le toluène ou leur mélange.

Selon un autre mode de réalisation avantageux, l'invention a pour objet l'utilisation de bois telle que définie ci-dessus, notamment sous forme de sous-produits de sciage de bois ou d'extraits de bois, pour lutter contre tout insecte xylophage, et notamment contre les isoptères tels que les termites, et contre les coléoptères tels que les vrillettes, les capricornes et les bostryches.

L'invention permet notamment de lutter contre les espèces de termites telles que *Coptotermes formosanus, Reticulitermes flavipes, R. hesperus, R. virginicus, R. tibialis et Heterotermes aureus*, ainsi que les espèces de termites des familles Mastotermitidae (espèces *Mastotermes),* Hodotermididae (espèces *Anacanthotermes, Zootermopsis),* Rhinotermitidae (espèces *Coptotermes, Heterotermes, Reticulitermes, Psammotermes, Prorhinotermes, Schedorrhinotermes*), Kalotermitidae (espèces *Glyptotermes, Neotermes, Cryptotermes, Incisitermes, Kalotermes, Marginitermes*), Serritermitidae, Termitidae (espèces *Pericapritermes, Allodontermes, Microtermes, Odontotermes, Nasutitermes, Termes, Amitermes, Globitermes, Microcerotermes*), Termopsidae (espèces *Hodotermopsis, Zootermopsis*).

Selon un mode de réalisation avantageux, l'invention est particulièrement appropriée pour lutter contre les termites des zones tempérées et tropicales, et notamment les termites souterrains, tels que les espèces des genres *Reticulitermes, Heterotermes* et *Coptotermes.*

L'invention a également pour objet un extrait de bois caractérisé en ce qu'il comprend, dans un solvant polaire ou non polaire ou un mélange de solvants, du bois du genre *Aniba,* et en particulier de l'espèce *parviflora* (*Aniba parviflora*), et éventuellement un agent de charge n'affectant pas les propriétés insecticides des bois du genre *Aniba,* et notamment améliorant l'effet répulsif des bois du genre *Aniba,* ledit agent de charge étant du bois du genre *Ocotea,* et notamment de l'espèce *rubra* (*Ocotea rubra*).

Par « solvant polaire », il faut comprendre tout solvant présentant une polarité allant de 3,5 à 9, ladite polarité étant établie selon les normes définies dans « Godfrey, Norman B., « Solvent Selection via Miscibility Number », CHEMTECH, 359-363 (1972) », et notamment choisi dans le groupe tel que défini ci-dessus.

Par « solvant non polaire », il faut notamment comprendre ceux choisis dans le groupe tel que défini ci-dessus.

Selon un mode de réalisation avantageux, l'invention a pour objet des extraits méthanoliques d'*Aniba parviflora* (bois de rose), ou des extraits méthanoliques contenant un mélange d'*Aniba parviflora* (bois de rose) et d'*Ocotea rubra* (grignon).

Les extraits méthanoliques d'*Aniba parviflora* ou d'*Aniba parviflora* et d'*Ocotea rubra* permettent de lutter contre les termites, et notamment les termites souterrains des zones tempérées et tropicales.

Selon un autre mode de réalisation avantageux de l'invention, les extraits méthanoliques contenant un mélange d'*Aniba parviflora* et d'*Ocotea rubra* contiennent environ 50% à environ 90%, et notamment environ 70% à environ 90% d'extrait méthanolique d'*Ocotea rubra* (agent de charge). Selon un autre mode de réalisation avantageux de l'invention, un extrait méthanolique de l'invention, contenant un mélange d'*Aniba parviflora* et d'*Ocotea rubra*, peut être utilisé dans des buts différents (par exemple uniquement à titre préventif vis-à-vis des termites, ou à titre curatif, ou à titre préventif et curatif), en fonction des quantités respectives d'*Aniba parviflora* et d'*Ocotea rubra* utilisées.

A titre d'exemple, un extrait de l'invention contenant environ 20% en poids d'extrait méthanolique d'*Aniba parviflora* et environ 80% en poids d'extrait méthanolique d'*Ocotea* *rubra*, sera avantageusement utilisé dans un traitement curatif, tandis qu'un extrait de l'invention contenant environ 10% en poids d'extrait méthanolique d'*Aniba parviflora* et environ 90% en poids d'extrait méthanolique d'*Ocotea rubra*, sera avantageusement utilisé dans un traitement préventif vis-à-vis des termites. On entend par traitement curatif un traitement effectué pendant l'infestation causée par les termites, et par traitement préventif un traitement effectué avant une éventuelle infestation causée par les termites.

La présente invention a encore pour objet une composition insecticide, notamment termicide, caractérisée en ce qu'elle contient des sous-produits de sciage de bois tels que morceaux, copeaux, poudres et/ou sciures de bois provenant du genre *Aniba,* et en particulier de l'espèce *parviflora* (*Aniba parviflora*).

Selon un autre mode de réalisation avantageux, l'invention a pour objet une composition insecticide telle que définie ci-dessus, caractérisée èn ce qu'elle contient en outre un agent de charge n'affectant pas les propriétés insecticides des bois du genre *Aniba,* et notamment améliorant l'effet répulsif des bois du genre *Aniba,* ledit agent de charge étant sous la forme de sous-produits de sciage de bois du genre *Ocotea,* et notamment de l'espèce *rubra* (*Ocotea rubra*).

L'invention a également pour objet une composition insecticide, notamment termicide, contenant au moins un extrait de bois dans un solvant polaire ou non polaire ou un mélange de solvants, tel que défini ci-dessus.

Par « composition insecticide », on entend une composition pour lutter contre les insectes ravageurs, et notamment contre les insectes xylophages, tels que ceux définis ci-dessus.

Par « composition terinicide », on entend une composition pour lutter contre les termites, tels que ceux appartenant aux espèces énumérées ci-dessus.

En effet, les compositions insecticides de l'invention présentent avantageusement des effets répulsif, toxique et antiappétant contre les termites, et notamment les termites souterrains des zones tempérées et tropicales.

L'un des intérêts d'un extrait de bois dans un solvant polaire ou non polaire, ou un mélange de solvants, tel que défini ci-dessus, est qu'il peut servir à imprégner un support.

A ce titre, l'invention a également pour objet un support imprégné d'un extrait dans un solvant polaire ou non polaire ou un mélange de solvants, tel que défini ci-dessus, ou d'une composition contenant au moins un extrait, telle que définie ci-dessus, caractérisé en ce qu'il contient de la cellulose, et est notamment choisi dans le groupe constitué par le bois tel que les conifères (par exemple pin sylvestre, pin maritime), les feuillus (par exemple peuplier), le papier, les éthers ou esters de cellulose tels que la méthylcellulose, l'hydroxypropylméthylcellulose et l'hydroxybutylméthylcellulose, ou en ce qu'il contient des matières plastiques telles que le polypropylène, le polyuréthane, le polyéthylène, le polychlorure de vinyle (PVC).

Selon un mode de réalisation avantageux de l'invention, le bois impliqué dans le support est utilisé sous la forme de sous-produits de sciage de bois non répulsifs vis-à-vis des termites. Par « sous-produits de sciage de bois », il faut entendre les morceaux, copeaux, poudres et/ou sciures de bois tels que définis ci-dessus. Par « bois non répulsif vis-à-vis des termites », il faut entendre les bois tels que définis ci-dessus (par exemple les conifères, les feuillus).

Selon un autre mode de réalisation avantageux de l'invention, les matières plastiques impliquées dans le support sont utilisées sous la forme de mousses expansées, ou sous la forme de particules de matières plastiques présentant des tailles allant d'environ 0,2 mm à environ 5 mm. Par « mousses expansées », il faut entendre les mousses rigides, et notamment celles convenant pour l'isolation dans le bâtiment.

De façon avantageuse, le support tel que défini ci-dessus est imprégné d'une quantité d'extrait provenant d'une quantité de bois supérieure à un dixième de la quantité de support, et notamment d'une quantité d'extrait provenant d'une quantité de bois variant de un dixième à 100 fois la quantité de support.

Selon un mode de réalisation avantageux de l'invention, le support contenant de la cellulose est du papier, notamment celui convenant pour la filtration sur entonnoir Büchner ou flacon Büchner, ou du pin sylvestre, et est imprégné d'un extrait méthanolique d'*Aniba parviflora* (bois de rose) ou d'un extrait méthanolique d'*Aniba parviflora* et d'*Ocotea rubra*.

A titre d'exemple, pour un support de bois pin sylvestre, la quantité imprégnée d'extrait de bois dans un solvant polaire ou non polaire selon l'invention est, pour une efficacité optimale, de 200 g par m² de support.

L'invention a encore pour objet l'utilisation d'un extrait dans un solvant polaire ou non polaire ou un mélange de solvants, tel que défini ci-dessus, ou d'une composition contenant au moins un extrait telle que définie ci-dessus, sous une forme appropriée à une application par pulvérisation.

Ainsi, les extraits ou compositions contenant lesdits extraits tels que définis ci-dessus pourront par exemple être utilisés dans un aérosol.

Pour préparer un extrait dans un solvant polaire ou non polaire ou un mélange de solvants, tel que défini ci-dessus, ou un extrait entrant dans une composition telle que définie ci-dessus, on peut avoir recours à un procédé d'extraction par immersion ou à un procédé d'extraction par lixiviation, comme par exemple la percolation. Ces différents procédés d'extraction font appel à l'utilisation d'un solvant, et seront dénommés ci-après « procédé d'extraction par solvant ».

Le procédé d'extraction par solvant comprend généralement les étapes suivantes :
◆ on extrait des sous-produits de sciage de bois tels que morceaux, copeaux, poudres et/ou sciures de bois provenant du genre *Aniba,* et en particulier de l'espèce *parviflora* (*Aniba parviflora*), et éventuellement de bois n'affectant pas les propriétés insecticides des bois du genre *Aniba,* et notamment améliorant l'effet répulsif des bois du genre *Aniba,* tels que les bois du genre *Ocotea,* et notamment de l'espèce *rubra* (*Ocotea rubra*),
   à l'aide d'au moins un solvant polaire ou non polaire, ledit solvant polaire présentant notamment une polarité allant de 3,5 à 9 (établie selon les nonnes définies dans « Godfrey, Norman B., « Solvent Selection via Miscibility Number », CHEMTECH, 359-363 (1972) »), et notamment choisi dans le groupe tel que défini ci-dessus, ledit solvant non polaire étant notamment choisi dans le groupe constitué par le pentane, le dichlorométhane, le benzène, l'hexane, le toluène ou leur mélange,
   pendant un temps variant de 10 minutes à 36 heures, à une température variant de 10°C à 80°C pour obtenir un mélange comportant lesdits sous-produits de sciage du bois,
◆ on élimine les sous-produits de sciage du bois du mélange obtenu à l'étape précédente, notamment par filtration, pour obtenir l'extrait de l'invention,
◆ on évapore éventuellement l'extrait obtenu à l'étape précédente afin d'obtenir un extrait sec ou concentré.

A titre d'exemple, selon un mode de réalisation avantageux de l'invention, lorsque le solvant d'extraction utilisé est le pentane, l'extraction est effectuée à une température variant d'environ 20°C à environ 25 °C, pendant un temps suffisant pour obtenir une suspension dont la couleur reste constante pendant au moins 1 heure. Pour fixer les idées, la durée de l'extraction est d'environ 8 heures à environ 12 heures. La suspension ainsi obtenue est filtrée pour obtenir l'extrait selon l'invention. L'extrait obtenu est éventuellement évaporé à une température comprise entre environ 20°C à environ 45°C, pour obtenir un extrait sec ou concentré. Ledit extrait sec ou concentré pourra ensuite être dilué dans le solvant d'extraction afin de pouvoir être imprégné sur un support.

Les morceaux, copeaux, poudres et/ou sciures de bois sont obtenus à partir d'*Aniba parviflora* (bois de rose) et éventuellement d'*Ocotea rubra* (grignon), par n'importe quel procédé approprié, et notamment par sciage du bois.

Selon un mode de réalisation avantageux de l'invention, les rapports entre les quantités de sous-produits de sciage de bois tels que définis ci-dessus et les quantités de solvant d'extraction (polaire ou non polaire) varient d'environ 1/3 à environ 1/10.

A titre d'exemple, les quantités de sous-produits de sciage de bois varient d'environ 1 g à environ 200 g de bois, et notamment d'environ 2 g à environ 25 g de bois, pour environ 20 ml à environ 1000 ml de solvant, et notamment environ 50 ml à environ 100 ml de solvant tel que défini ci-dessus.

Plus particulièrement, le procédé de préparation est caractérisé en ce que l'on extrait des sous-produits de sciage de bois tels que les poudres de bois, à l'aide de méthanol, en une quantité variant d'environ 2 g à environ 10 g de poudre de bois, pour environ 20 ml à environ 50 ml de méthanol, pendant un temps variant d'environ 10 heures à environ 24 heures, à une température variant d'environ 10°C à environ 30°C.

A l'échelle industrielle, on pourra par exemple utiliser environ 1000 kg de sous-produits de sciage du bois pour environ 5 m³ de solvant d'extraction.

L'invention concerne également une composition insecticide, notamment termicide, contenant un extrait susceptible d'être obtenu selon un procédé d'extraction par solvant tel que décrit ci-dessus.

### Description des figures

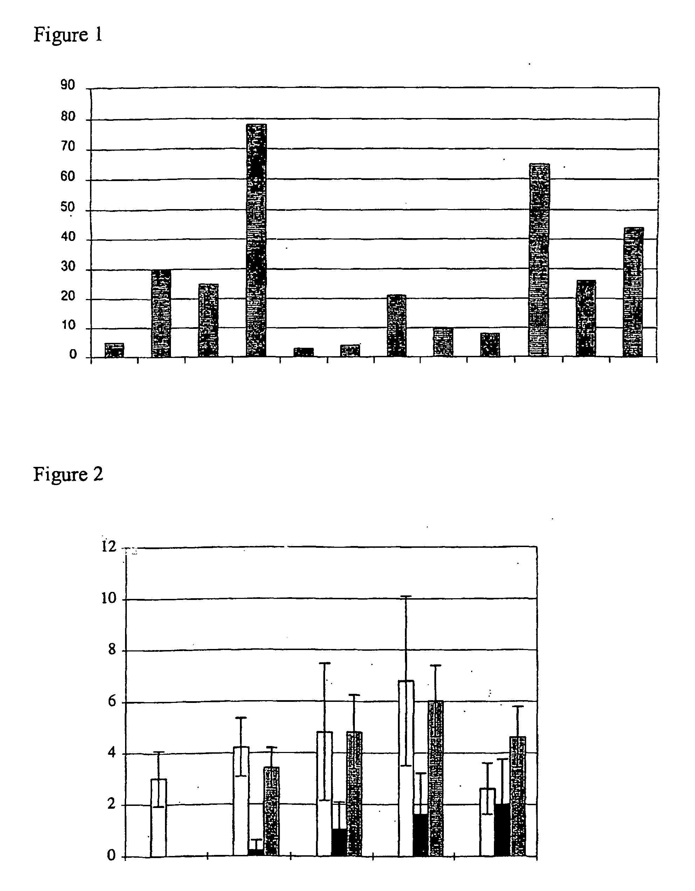

La **figure 1** illustre l'effet toxique de différents extraits de bois *Aniba parviflora* (bois de rose) sur les termites *Reticulitermes santonensis* (R.s) et *Heterotermes indicola* (H.i).

L'axe de ordonnées représente le taux de mortalité (en %) des termites R.s et H.i après 30 heures.

Les histogrammes représentent respectivement, en allant de gauche à droite sur l'axe des abscisses, le pourcentage de mortalité :
- de R.s lorsque l'on utilise du méthanol seul,
- de H.i lorsque l'on utilise du méthanol seul,
- de R.s lorsque l'on utilise un extrait méthanolique *d'Aniba parviflora*,
- de H.i lorsque l'on utilise un extrait méthanolique *d'Aniba parviflora*,
- de R.s lorsque l'on utilise du pentane seul,
- de H.i lorsque l'on utilise du pentane seul,
- de R.s lorsque l'on utilise un extrait au pentane d'*Aniba parviflora*,
- de H.i lorsque l'on utilise un extrait au pentane d'*Aniba parviflora*,
- de R.s lorsque l'on utilise du diclorométhane seul,
- de H.i lorsque l'on utilise du diclorométhane seul,
- de R.s lorsque l'on utilise un extrait au dichlorométhane d'*Aniba parviflora*,
- de H.i lorsque l'on utilise un extrait au dichlorométhane d'*Aniba parviflora*.

La **figure 2** compare les effets répulsifs des différentes essences de bois (témoin : pin sylvestre, grignon et rose) sur les termites *R. santonensis* après 1 jour de mise en contact des termites avec les essences de bois.

Les histogrammes blanc représentent la répartition des galeries de termites R.s dans le témoin (pin sylvestre) (centre : 0 cm ) et autour du témoin, à savoir à une distance de 2, 3, 4 cm de la sciure centrale, et à la périphérie, à savoir à une distance de la sciure centrale supérieure à 4 cm jusqu'au bord de la boîte de Pétri.

Les histogrammes noir représentent la répartition des galeries de termites R.s dans *Ocotea rubra* (centre) et autour de *Ocotea rubra*, à savoir à une distance de 2, 3, 4 cm de la sciure centrale, et à la périphérie, à savoir à une distance de la sciure centrale supérieure à 4 cm jusqu'au bord de la boîte de Pétri.

Les histogrammes gris représentent la répartition des galeries de termites R.s dans *Aniba parviflora* (centre) et autour de *Aniba parviflora* (à une distance de 2, 3, 4 cm de la sciure centrale, ou à la périphérie).
( 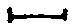 : intervalle de confiance pour une probabilité de 95%)

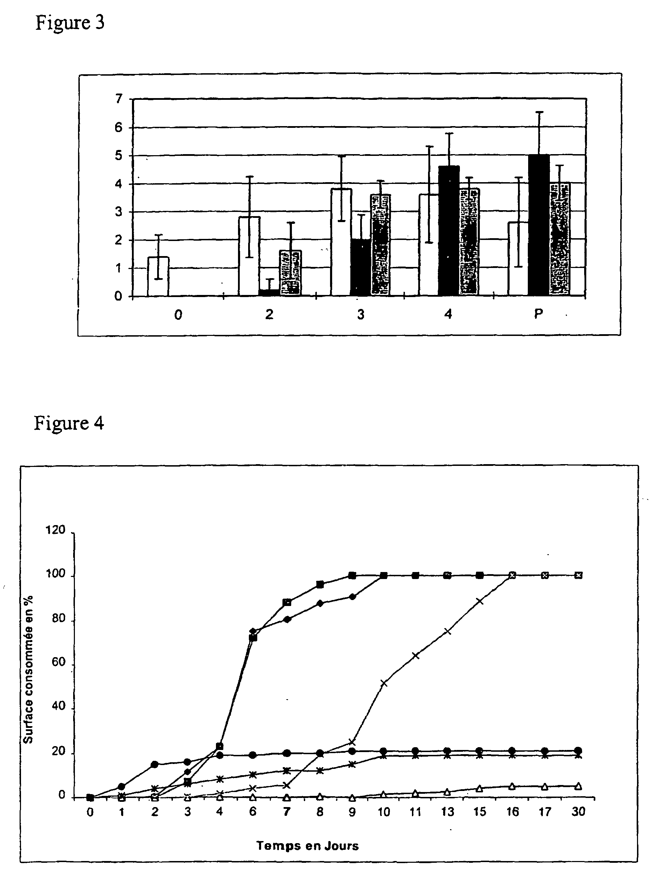

La **figure 3** compare les effets répulsifs des différentes essences de bois (témoin : peuplier, grignon et rose) sur les termites *H. indicola* après 1 jour de mise en contact des termites avec les essences de bois.

Les histogrammes blanc représentent la répartition des galeries de termites H.i dans le témoin (peuplier) (centre : 0 cm ) et autour du témoin (à une distance de 2, 3, 4 cm de la sciure centrale, ou à la périphérie). Les histogrammes noir représentent la répartition des galeries de termites H.i dans *Ocotea rubra* (centre) et autour de *Ocotea rubra* (à une distance de 2, 3, 4 cm de la sciure centrale, ou à la périphérie). Les histogrammes gris représentent la répartition des galeries de termites H.i dans *Aniba parviflora* (centre) et autour de *Aniba parviflora* (à une distance de 2, 3, 4 cm de la sciure centrale, ou à la périphérie).

Les « groupes » d'histogrammes blanc, noir et gris représentent respectivement, de gauche à droite, la répartition des galeries de termites (a) dans le bois (0 cm), à (b) 2 cm du bois, (c) 3 cm du bois, (d) 4 cm du bois et, (e) à la périphérie du bois (à savoir à une distance de la sciure centrale supérieure à 4 cm jusqu'au bord de la boîte de Pétri).
( 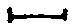 : intervalle de confiance pour une probabilité de 95%)

La **figure 4** représente l'effet antiappétant des extraits selon l'invention sur les termites *R*. *santonensis* (R.s) et *H. indicola* (H.i), en fonction de la nature de l'extrait méthanolique.

L'axe des abscisses représente le temps en jours et l'axe des ordonnées représente la surface consommée (en %) du support.

La courbe avec les losanges noirs (◆) représente la consommation du témoin, à savoir du support non imprégné (papier Whatman seul). La courbe avec les carrés noirs (■) représente la consommation du support imprégné de méthanol seul.

La courbe avec les triangles blancs (Δ) représente la consommation par *R. santonenesis* du support imprégné d'un extrait de Rose.

La courbe avec les croix (x) représente la consommation par *R. santonenesis* du support imprégné d'un extrait de Grignon.

La courbe avec les étoiles (*) représente la consommation par *H. indicola* du support imprégné d'un extrait de Rose.

La courbe avec les ronds noirs (•) représente la consommation par *H. indicola* du support imprégné d'un extrait de Grignon.

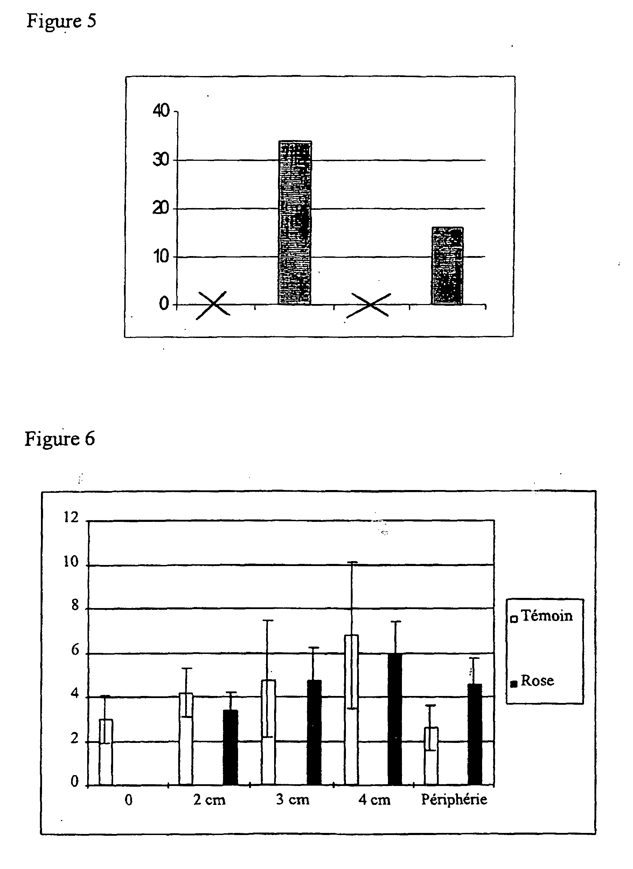

La **figure 5** représente la comparaison de la consommation de la cellulose par les termites du genre *R. santonensis* et H. indicola avec et sans extrait de *Aniba parviflora* (bois de rose) après 7 jours de mise en contact des termites avec les supports imprégnés d'extraits selon l'invention.

La figure 5 représente plus particulièrement de gauche à droite :
- la consommation (en %), par *H. indicola*, du papier imprégné par un extrait méthanolique d'*Aniba parviflora* (la croix symbolise 0% de consommation),
- la consommation (en %), par *H. indicola*, du papier imprégné de méthanol seul (témoin) (représentée par un histogramme),
- la consommation (en %), par *R. santonensis*, du papier imprégné par un extrait méthanolique *d'Aniba parviflora* (la croix symbolise 0% de consommation),
- la consommation (en %), par *R. santonensis*, du papier imprégné de méthanol seul (témoin) (représentée par un histogramme).

La **figure 6** illustre les effets répulsifs d'un extrait méthanolique d'*Aniba parviflora* (A,p) sur *R. santonensis* (R.s) après 1 jour de mise en contact de R.s avec ledit extrait.

Les histogrammes blancs représentent la répartition des galeries de termites R.s dans le témoin (peuplier) (centre : 0 cm) et autour du témoin (à une distance de 2, 3, 4 cm de la sciure centrale ou à la périphérie).

Les histogrammes noirs représentent la répartition des galeries de termites R.s autour de *Aniba parviflora* (à une distance de 2, 3, 4 cm de la sciure centrale ou à la périphérie).
( 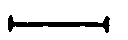 : intervalle de confiance pour une probabilité de 95%)

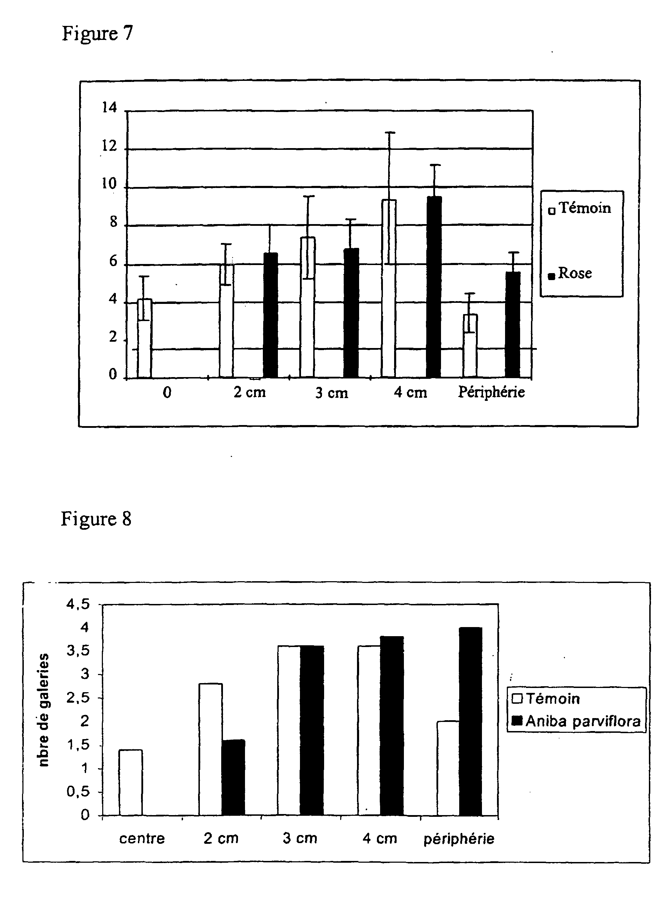

La **figure 7** illustre les effets répulsifs d'un extrait méthanolique d'*Aniba parviflora* (A,p) sur *R. santonensis* (R.s) après 8 jours de mise en contact de R.s avec ledit extrait.

Les histogrammes blancs représentent la répartition des galeries de termites R.s dans le témoin (peuplier) (centre : 0 cm) et autour du témoin (à une distance de 2, 3, 4 cm de la sciure centrale ou à la périphérie).

Les histogrammes noirs représentent la répartition des galeries de termites R.s autour de *Aniba parviflora* (à une distance de 2, 3, 4 cm de la sciure centrale ou à la périphérie).
( 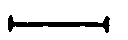 : intervalle de confiance pour une probabilité de 95%)

La **figure 8** illustre les effets répulsifs d'un extrait méthanolique d'*Aniba parviflora* (A,p) sur *H. indicola* (H.i) après 1 jour de mise en contact de H.i avec ledit extrait.

Les histogrammes blancs représentent la répartition des galeries de termites H.i dans le témoin (peuplier) (centre : 0 cm) et autour du témoin (à une distance de 2, 3, 4 cm de la sciure centrale ou à la périphérie).

Les histogrammes noirs représentent la répartition des galeries de termites H.i autour de *Aniba parviflora* (à une distance de 2, 3, 4 cm de la sciure centrale ou à la périphérie).
( 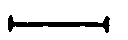 : intervalle de confiance pour une probabilité de 95%)

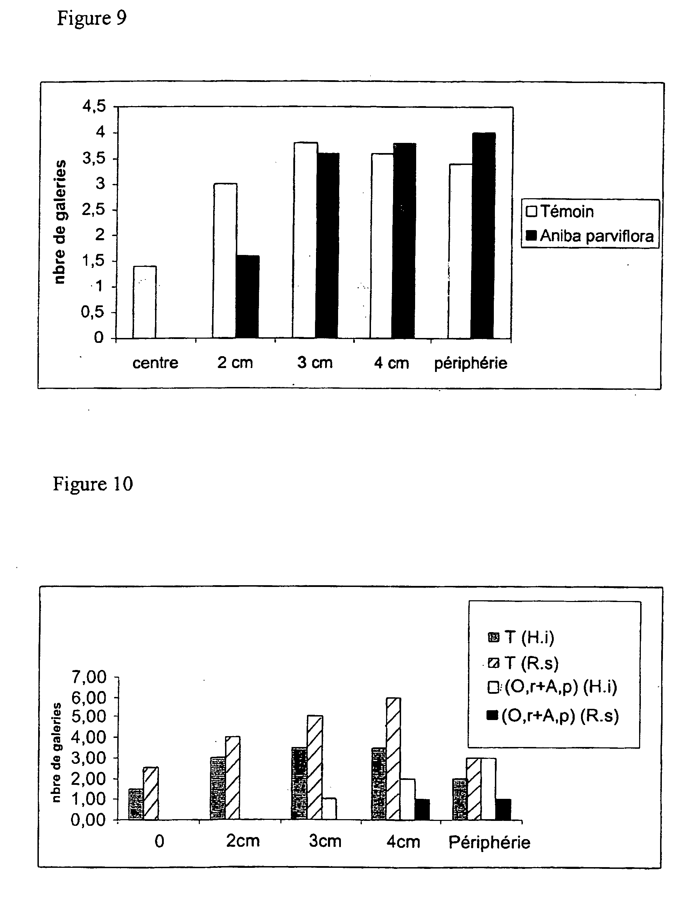

La **figure 9** illustre les effets répulsifs d'un extrait méthanolique d'*Aniba parviflora* (A,p) sur *H. indicola* (H.i) après 5 jours de mise en contact de H.i avec ledit extrait.

Les histogrammes blancs représentent la répartition des galeries de termites H.i dans le témoin (peuplier) (centre : 0 cm) et autour du témoin (à une distance de 2, 3, 4 cm de la sciure centrale ou à la périphérie).

Les histogrammes noirs représentent la répartition des galeries de termites H.i autour de *Aniba parviflora* (à une distance de 2, 3, 4 cm de la sciure centrale ou à la périphérie).
( 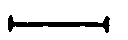 : intervalle de confiance pour une probabilité de 95%)

La **figure 10** illustre les effets répulsifs d'un mélange d'extraits méthanoliques d'*Aniba parviflora* et d'*Ocotea rubra* (A,p + O,r) respectivement sur H.i et R.s après un jour de mise en contact dudit mélange d'extraits avec respectivement H.i et R.s.

Les histogrammes gris représentent la répartition des galeries de termites H.i dans le témoin (peuplier) (centre : 0 cm) et autour du témoin (à une distance de 2, 3, 4 cm de la sciure centrale ou à la périphérie).

Les histogrammes hachurés représentent la répartition des galeries de termites R.s dans le témoin (centre : 0 cm) et autour du témoin (à une distance de 2, 3, 4 cm de la sciure centrale ou à la périphérie).

Les histogrammes blancs représentent la répartition des galeries de termites H.i autour du mélange (*Aniba parviflora + Ocotea rubra*).

Les histogrammes noirs représentent la répartition des galeries de termites R.s autour du mélange (*Aniba parviflora + Ocotea rubra*).

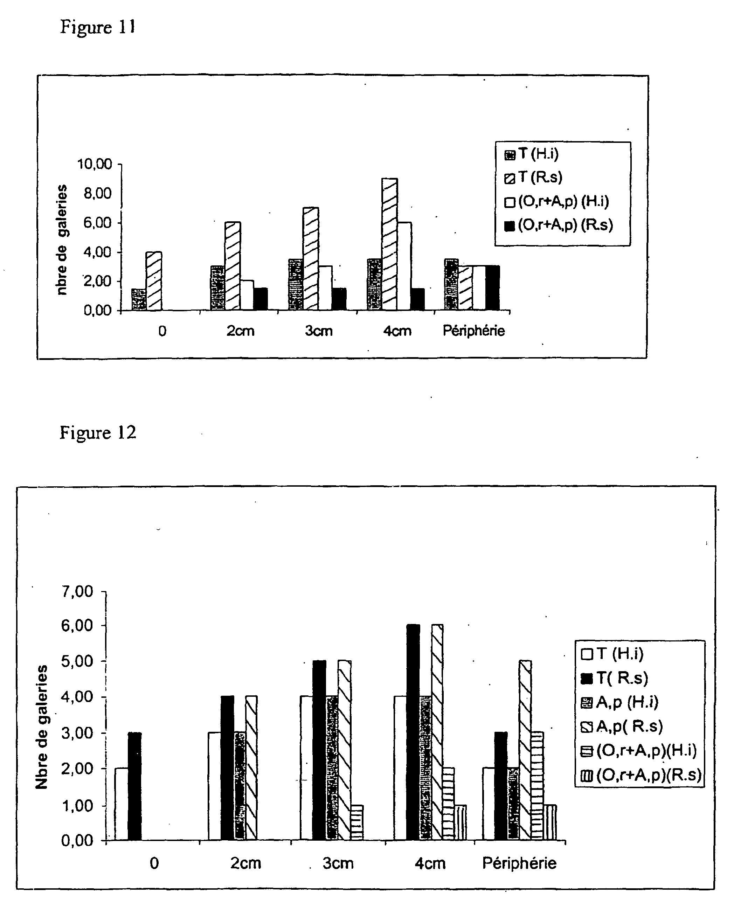

La **figure 11** illustre les effets répulsifs d'un mélange d'extraits méthanoliques d'*Aniba parviflora* et d'*Ocotea rubra* (A,p + O,r) respectivement sur H.i et R.s après 5 jours de mise en contact dudit mélange d'extraits avec respectivement H.i et R.s.

Les histogrammes gris représentent la répartition des galeries de termites H.i dans le témoin (peuplier) (centre : 0 cm) et autour du témoin (à une distance de 2, 3, 4 cm de la sciure centrale ou à la périphérie).

Les histogrammes hachurés représentent la répartition des galeries de termites R.s dans le témoin (peuplier) (centre : 0 cm) et autour du témoin (à une distance de 2, 3, 4 cm de la sciure centrale ou à la périphérie).

Les histogrammes blancs représentent la répartition des galeries de termites H.i autour de l'extrait méthanolique contenant le mélange (*Aniba parviflora* + *Ocotea rubra*).

Les histogrammes noirs représentent la répartition des galeries de termites R.s autour de l'extrait méthanolique contenant le mélange (*Aniba parviflora* + *Ocotea rubra*).

La **figure 12** compare les effets répulsifs :
- d'un extrait méthanolique d'*Aniba parviflora* (A,p) et,
- d'un extrait méthanolique contenant le mélange (*Aniba parviflora + Ocotea rubra*) (A,p + O,r),
sur *H. indicola* (H.i) et sur *R. santonensis* (R.s) après 1 jour de mise en contact.

Les histogrammes blancs représentent la répartition des galeries de termites H.i dans le témoin (peuplier) (centre : 0 cm) et autour du témoin (à une distance de 2, 3, 4 cm de la sciure centrale ou à la périphérie).

Les histogrammes noirs représentent la répartition des galeries de termites R.s dans le témoin (peuplier) (centre : 0 cm) et autour du témoin (à une distance de 2, 3, 4 cm de la sciure centrale ou à la périphérie).

Les histogrammes gris représentent la répartition des galeries de termites H.i autour de l'extrait méthanolique d'*Aniba parviflora*.

Les histogrammes hachurés à l'oblique représentent la répartition des galeries de termites R.s autour de l'extrait méthanolique d'*Aniba parviflora*.

Les histogrammes hachurés à l'horizontale représentent la répartition des galeries de termites H.i autour de l'extrait méthanolique contenant le mélange (*Aniba parviflora + Ocotea rubra*).

Les histogrammes hachurés à la verticale représentent la répartition des galeries de termites R.s autour de l'extrait méthanolique contenant le mélange (*Aniba parviflora + Ocotea rubra*).

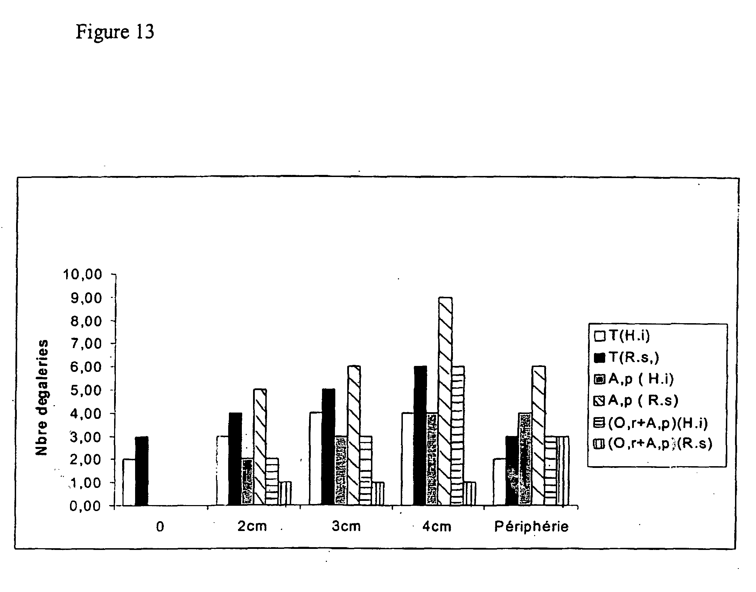

La **figure 13** compare les effets répulsifs :
- d'un extrait méthanolique d'*Aniba parviflora* (A,p) et,
- d'un extrait méthanolique contenant le mélange (*Aniba parviflora* + *Ocotea rubra*) (A,p + O,r),
sur *H. indicola* (H.i) et sur *R. santonensis* (R.s) après 5 jours de mise en contact.

Les histogrammes blancs représentent la répartition des galeries de termites H.i dans le témoin (peuplier) (centre : 0 cm) et autour du témoin (à une distance de 2, 3, 4 cm de la sciure centrale ou à la périphérie).

Les histogrammes noirs représentent la répartition des galeries de termites R.s dans le témoin (peuplier) (centre : 0 cm) et autour du témoin (à une distance de 2, 3, 4 cm de la sciure centrale ou à la périphérie).

Les histogrammes gris représentent la répartition des galeries de termites H.i autour de l'extrait méthanolique d'*Aniba parviflora*.

Les histogrammes hachurés à l'oblique représentent la répartition des galeries de termites R.s autour de l'extrait méthanolique d'*Aniba parviflora*.

Les histogrammes hachurés à l'horizontale représentent la répartition des galeries de termites H.i autour de l'extrait méthanolique contenant le mélange (*Aniba parviflora* + *Ocotea rubra*).

Les histogrammes hachurés à la verticale représentent la répartition des galeries de termites R.s autour de l'extrait méthanolique contenant le mélange (*Aniba parviflora* + *Ocotea rubra*).

Dans la partie expérimentale décrite ci-dessous, les deux espèces de termites testées sont :
- *Reticulitermes santonensis* (R.s), car cette espèce constitue l'espèce de termite la plus virulente en France, et c'est l'espèce utilisée pour les essais normalisés,
- *Heterotermes indicola* (H.i), car cette espèce constitue l'espèce tropicale de termite qui se reproduit le mieux en captivité et en élevage.

### A) METHODOLOGIE

Les supports utilisés dans les exemples ci-dessous, destinés à être imprégnés des extraits selon l'invention, sont encore appelés « substrats » et sont constitués de papier Whatman n°42.

Les extraits définis dans les exemples ci-dessous ont été préparés à partir de 100 g de bois (Aniba parviflora : rose ou Ocotea rubra : grignon) pour 500 ml de solvant (méthanol, pentane ou dichlorométhane) de la manière décrite ci-dessus. Lors de leur utilisation sur un support, les extraits sec de rose ou de grignon précédemment obtenus sont dilués en présence de 25 µl solvant (méthanol, pentane ou dichlorométhane) : on imprègne 1 cm² de papier Whatman n° 42 avec 25 µl d'extrait selon l'invention.

Les sous-produits de sciage de bois utilisés dans les exemples ci-dessous (encore appelés « essences de bois ») se trouvent sous la forme de sciure de bois.

### I. Effet toxique

### 1) Avec la sciure de bois

Mesure du pourcentage de mortalité, pour des essais menés en boîtes de Pétri, à raison de 50 termites ouvriers par boîte (5 essais par type de bois), sur sciure humidifiée d'*Ocotea rubra* et d'*Aniba parviflora*.

Témoins : 50 termites sur papier filtre sans cendre imbibée d'eau par boîte de Pétri pour *Reticulitermes santonensis* (R.s) et sur sciure de peuplier pour *Heterotermes indicola* (H.i).

### 2) Avec les extraits de bois

Les différentes étapes de préparation des extraits selon l'invention sont les suivantes :
- extraction dans 3 solvants : méthanol, pentane et dichlorométhane. L'extraction se fait à froid durant 12 heures sous agitation avec le ratio 1/5 (100 g de bois pour 500 g de solvant),
- filtration,
- réduction sous azote (si possible entre 10 ml et 1 ml).

### • Extraction à l'aide du méthanol

Les extractions des bois (*Ocotea rubra*, *Aniba parviflora*) sont effectuées au méthanol par agitation pendant 12 h, puis on évapore le mélange obtenu et on pèse l'extrait sec obtenu.

Les extraits méthanoliques sec ainsi obtenus sont déposés sur des carrés de papier Whatman (N° 42) de 1 cm², d'un poids de 10 mg, à raison de 10 mg (10µl de méthanol) d'équivalent bois (dilution 0), 1 mg (dilution1/10^{ème}) et 0,1 mg (dilution 1/100^{ème}).

Les termites ouvriers sont répartis à 50 par boîte et 5 boîtes par essai dans des boîtes de Pétri contenant 10 g de sable de Fontainebleau humidifiés par 2,5 mg d'eau.

Chaque boîte contient également un carré de papier imbibé de l'extrait méthanolique : les 2 bois et leurs dilutions au 1/10^{ème} et 1/100^{ème}, les témoins (papier Whatman seul) et les contrôles (méthanol seul).

### • Extraction à l'aide du pentane

Les extractions des bois (*Ocotea rubra, Aniba parviflora*) sont effectuées au pentane par agitation pendant 12 h, puis on évapore le mélange obtenu et on pèse l'extrait sec obtenu.

Les extraits sec obtenus sont déposés sur des carrés de papier Whatman (N° 42) de 1 cm², d'un poids de 10 mg, à raison de 10 mg (25µl de pentane) d'équivalent bois (dilution 0), 1 mg (dilution1/10^{ème} et 0,1 mg (dilution 1/100^{ème}).

Les termites ouvriers sont répartis à 50 par boîte et 5 boîtes par essai dans des boîtes de Pétri contenant 10 g de sable de Fontainebleau humidifiés par 2,5 mg d'eau.

Chaque boîte contient également un carré de papier imbibé de l'extrait au pentane : les 2 bois et leurs dilutions au 1/10^{ème} et 1/100^{ème}, les témoins (papier Whatman seul) et les contrôles (pentane seul).

### • Extraction à l'aide du dichlorométhane

Les extractions des bois (*Ocotea rubra, Aniba parviflora*) sont effectuées au dichlorométhane par agitation pendant 12 h, puis on évapore le mélange obtenu et on pèse l'extrait sec obtenu.

Les extraits sec obtenus sont déposés sur des carrés de papier Whatman (N° 42) de 1 cm², d'un poids de 10 mg, à raison de 10 mg (25µl de dichlorométhane) d'équivalent bois (dilution 0), 1 mg (dilution1/10^{ème}) et 0,1 mg (dilution 1/100^{ème}).

Les termites ouvriers sont répartis à 50 par boîte et 5 boîtes par essai dans des boîtes de Pétri contenant 10 g de sable de Fontainebleau humidifiés par 2,5 mg d'eau.

Chaque boîte contient également un carré de papier imbibé de l'extrait au dichlorométhane : les 2 bois et leurs dilutions au 1/10^{ème} et 1/100^{ème}, les témoins (papier Whatman seul) et les contrôles (dichlorométhane seul).

### II. Effet répulsif

### 1) Avec la sciure de bois

Dans des boîtes de Pétri de 10 cm de diamètre, 30g de sable de Fontainebleau sont imbibés de 7,5 ml d'eau. Un puits central, creusé dans le sable, contient 2g de sciure des 2 bois et du témoin *(Pinus sylvestris)*. Les termites ouvriers sont répartis dans les boîtes à raison de 50 par boîte et 5 boîtes par essai.

L'effet répulsif est apprécié par l'observation de termites dans la sciure, au centre, et par le nombre et la répartition des galeries dans le sable. Le nombre de galeries qui coupent des cercles concentriques situés à 2, 3 ou 4 cm de la sciure centrale a été mesuré.

### 2) Avec les extraits de bois

La mesure du nombre de galeries est effectuée dans les mêmes conditions que pour la sciure de bois, après 3 jours de mise en contact des termites avec les supports imprégnés d'extraits de bois, car les résultats obtenus pour les effets répulsifs des sciures de bois montrent que cette répartition est significative après ce temps d'expérience.

### III. Effet antiappétant

### Avec les extraits de bois

Les extraits obtenus sont déposés sur des carrés de papier Whatman de 1 cm², d'un poids de 10 mg, à raison de 10 mg d'équivalent bois (dilution 0), 1 mg (dilution 1/10^{ème}) et 0,1 mg (dilution 1/100^{ème}).

Dans des boîtes de Pétri de 5 cm de diamètre, 10 g de sable de Fontainebleau sont imbibés de 2,5 ml d'eau. On dépose un papier dans chaque boîte, pour chaque dilution (0, 1/10^{ème}, 1/100^{ème}), chaque solvant et chaque bois et à raison de 5 boîtes par essai.

Les termites ouvriers sont répartis à 50 par boîte.

L'effet anti-appétant est évalué par mesure de la surface de papier consommé en fonction du temps.

### IV. Tests de choix

### Avec les extraits de bois

Les résultats précédents obtenus lors des tests de répulsivité pour les extraits de l'invention ont conduit à utiliser l'extrait méthanolique de Rose (*Aniba parviflora*) pour le test de choix.

Dans des boîtes de Pétri de 5 cm de diamètre, 10 g de sable de Fontainebleau sont imbibés de 2,5 ml d'eau. On dépose dans chaque boîte 2 carrés de papier Whatman de 1 cm² (10 mg), le premier imprégné de méthanol, le second imprégné d'un extrait méthanolique concentré. Un volume d'extrait correspondant à 10 mg de bois est déposé sur le papier, à raison de 5 boîtes par essai.

Les termites ouvriers sont répartis à 50 par boîte.

La surface de papier consommé est mesurée après 7 jours de mise en contact des termites avec les supports imprégnés d'extraits selon l'invention.

### B) RESULTATS et CONCLUSIONS

### I. Effet toxique

### 1) Avec la sciure de bois

Les termites ne creusent pas de galerie dans la sciure, quel que soit le bois.

Des mouvements anarchiques et rapides sont observés sur chaque type de bois quelques minutes après le début de l'expérience. Les mouvements sont lents après 12 heures de mise en contact des termites avec la sciure de bois.

Le **tableau 1** ci-dessous illustre l'effet toxique par contact des différentes essences de bois (grignon et rose) sur les termites des espèces R.s et H.i ; les chiffres indiqués représentent le pourcentage de mortalité avec un intervalle de confiance pour une probabilité de 95%.

**Tableau 1**

| Temps (jours) | 0 | 0,5 | 1 | 1,5 | 2 | 3 | 5 | 10 |
|---|---|---|---|---|---|---|---|---|
| Témoin | 0 ± 0 | 0 ± 0 | 1,6±1,5 | 4 ± 0,6 | 7,2 ± 2,7 | 19,6 ± 3,4 | 61,2 ± 5,5 | 80,8 ± 4,4 |
| Grignon (H.i) | 0 ± 0 | 0 ± 0 | 3,2 ± 1,6 | 75,2 ± 5,1 | 90,4 ± 3,4 | 98,4 ± 1,5 | 100 ± 0 | 100 ± 0 |
| Rose (H.i) | 0 ± 0 | 34,8 ± 6,2 | 68,8 ± 11,3 | 81,8 ± 3,1 | 96,6 ± 4,7 | 100 ± 0 | 100 ± 0 | 100 ± 0 |
| Grignon (R.s) | 0 ± 0 | 63,6 ± 28,4 | 87,2 ± 19,3 | 100 ± 0 | 100 ± 0 | 100 ± 0 | 100 ± 0 | 100 ± 0 |
| Rose (R.s) | 0 ± 0 | 76,8 ± 11,3 | 97,2 ± 2,0 | 100 ± 0 | 100 ± 0 | 100 ± 0 | 100 ± 0 | 100 ± 0 |

### Conclusion :

Les mesures du pourcentage de mortalité montrent un effet maximal de toxicité avec les extraits *Aniba parviflora*.

### 2) Avec les extraits de bois

Afin d'affiner les résultats obtenus pour la sciure de bois, l'effet toxique est étudié sur les termites avec les différents extraits de l'essence la plus toxique qui est *Aniba parviflora*.

Après 30 heures, les résultats montrent que l'effet maximal est obtenu avec les extraits méthanoliques (**figure 1**).

### II. Effet répulsif

### 1) Avec la sciure de bois

Les **tableaux 2, 3 et 4** ci-dessous illustrent l'effet répulsif de différentes essences de bois sur les termites *R. santonensis* (R.s) et *H. indicola* (H.i).

Plus particulièrement, le **tableau 2** représente la répartition des galeries de termites H.i et R.s dans le témoin au jour 0, et après 1 jour, 2 jours, 3 jours et 4 jours de mise en contact des termites avec la sciure de bois. Pour les termites H.i, le témoin est le pin sylvestre, et pour R.s le témoin est le peuplier.

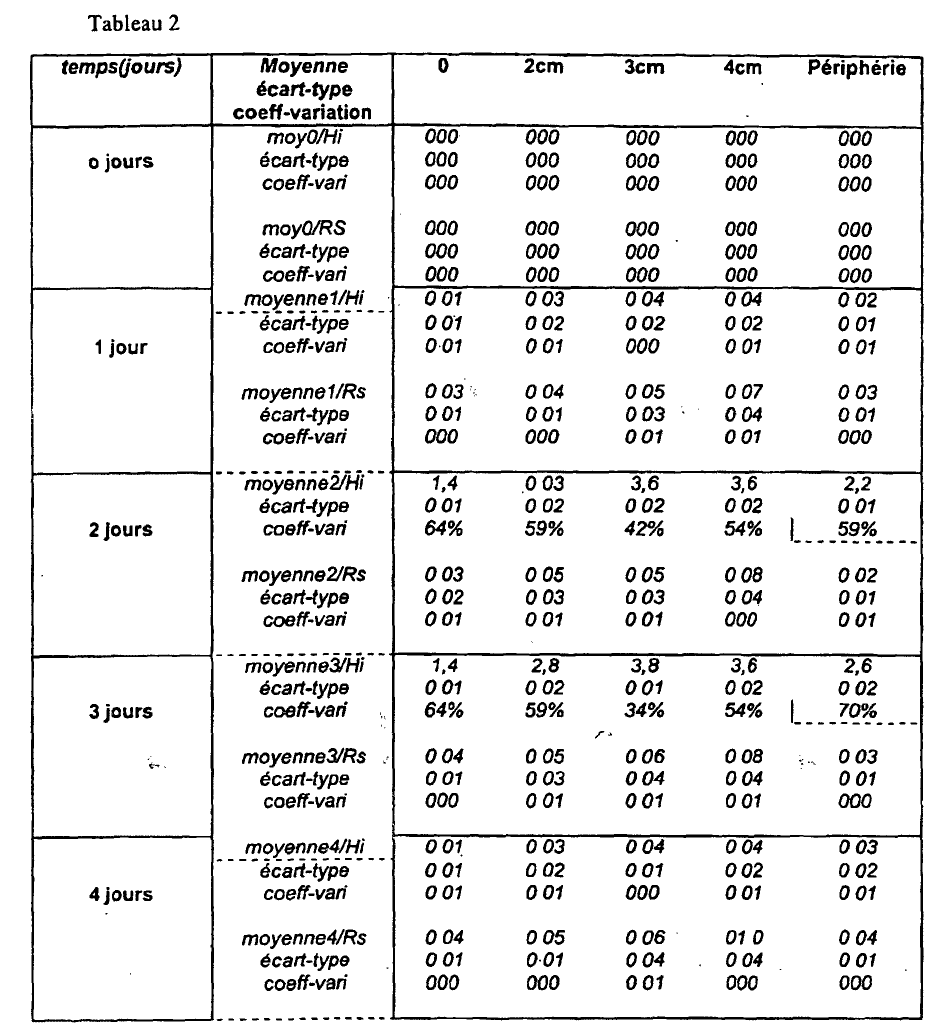

Le **tableau 3** représente la répartition des galeries de termites H.i et R.s dans *Ocotea rubra* (grignon), au jour 0, et après 1 jour, 2 jours, 3 jours et 4 jours de mise en contact des termites avec la sciure de bois.

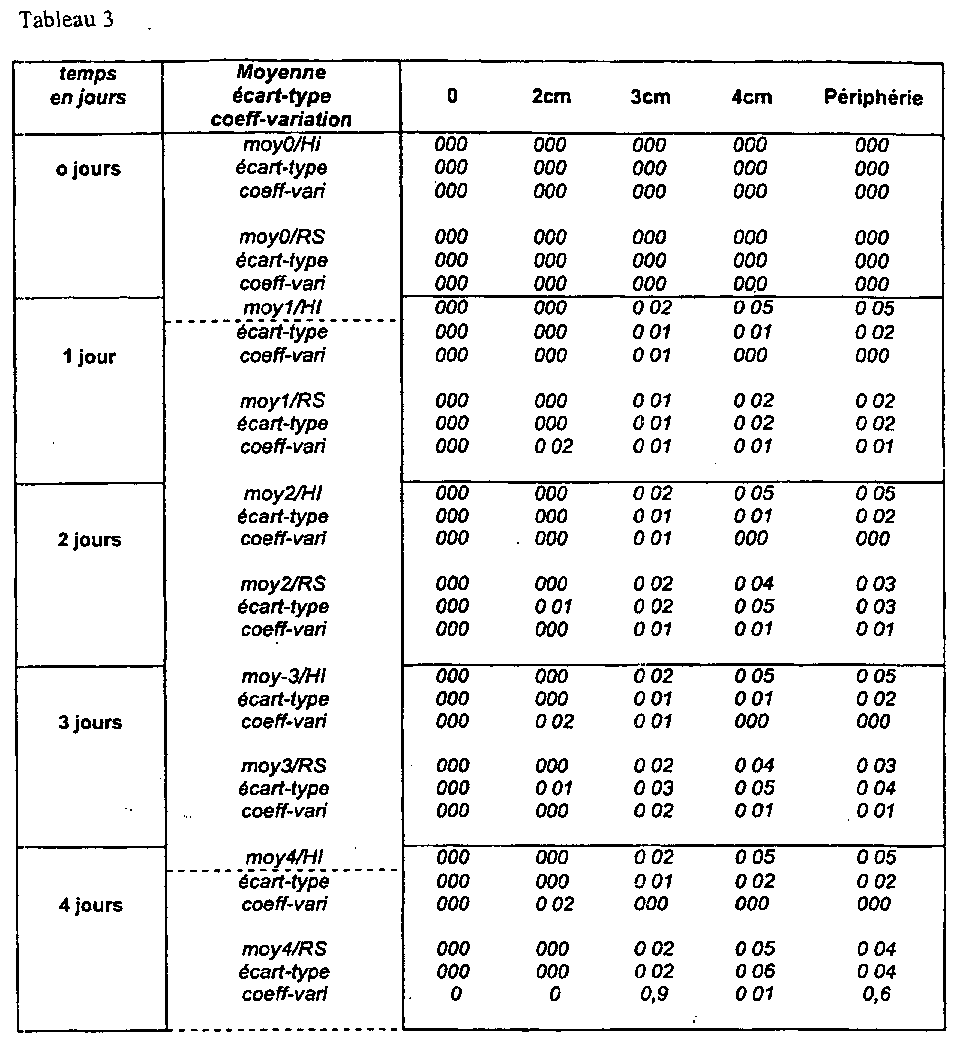

Le **tableau 4** représente la répartition des galeries de termites H.i et R.s dans *Aniba parviflora*, au jour 0, et après 1 jour, 2 jours, 3 jours et 4 jours de mise en contact des termites avec la sciure de bois.

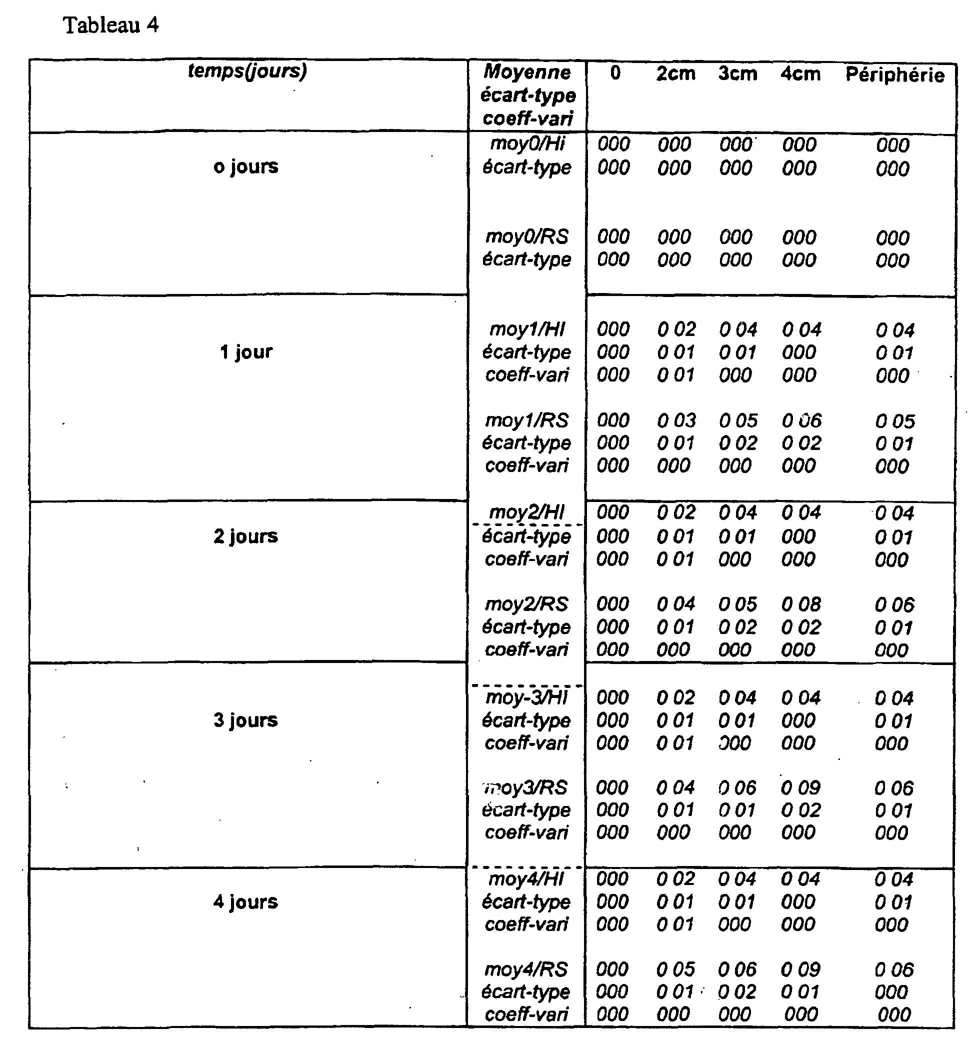

La répartition des galeries de termites R.s dans le témoin (pin sylvestre), *Ocotea rubra*, *Aniba parviflora* après 1 jour de mise en contact des termites avec la sciure est illustrée par la **figure 2**. La répartition des galeries de termites H.i dans le témoin (peuplier), *Ocotea rubra*, *Aniba parviflora* après 1 jour de mise en contact des termites avec la sciure est illustrée par la **figure 3**.

### Conclusion :

Les deux essences (*Ocotea rubra* et *Aniba parviflora)* ont un effet répulsif très net par rapport au témoin. La comparaison des résultats obtenus après 1 et 8 jours de mise en contact des termites avec la sciure pour *Reticulitermes santonensis*, et après 1 et 5 jours de mise en contact des termites avec la sciure pour *Heterotermes indicola*, montre que l'effet maximal est obtenu avec *Ocotea rubra* (Grignon).

### 2) Avec les extraits de bois

Le **tableau 5** ci-dessous représente une étude comparative de l'effet répulsif après 3 jours de mise en contact des termites avec le support imprégné d'un extrait de l'invention, sur les termites *R. santonensis*, des extraits d'Ocotea rubra (grignon) en fonction de la nature du solvant utilisé.

Les chiffres indiqués représentent le nombre et la répartition des galeries dans le dispositif expérimental décrit ci-dessus (avec un intervalle de confiance pour 95%).

On compare l'effet répulsif d'un extrait grignon/pentane par rapport au pentane seul (témoin), d'un extrait grignon/dichlorométhane par rapport au diclorométhane seul (témoin), d'un extrait grignon/méthanol par rapport au méthanol seul (témoin).

**Tableau 5**

| Répartition | 0 cm | 2 cm | 3 cm | 4 cm | Périph |
|---|---|---|---|---|---|
| Pentane seul | 0 ± 0 | 2,6 ± 1,5 | 5,8 ± 3,1 | 7,2 ± 3,8 | 1,8 ± 0,7 |
| Grignon dans pentane | 0 ± 0 | 2,2 ± 0,7 | 4,2 ± 2,4 | 4,2 ± 1,6 | 2,0 ± 1,2 |
| Méthanol | 0 ± 0 | 6,8 ± 3,2 | 9,2 ± 3,4 | 13,8 ± 4,6 | 2,2 ± 0,9 |
| Grignon dans méthanol | 0 ± 0 | 0,2 ± 0,4 | 0,4 ± 0,5 | 1,4 ± 1,4 | 0,6 ± 0,7 |
| Dichlorométhane | 0 ± 0 | 2,8 ± 0,7 | 7,4 ± 1,2 | 10,0 ± 4,2 | 2,0 ± 0,8 |
| Grignon dans dichlorométhane | 0 ± 0 | 1,8 ± 1,4 | 4,2 ± 3,2 | 4,4 ± 2,6 | 1,6 ± 0,5 |

Le **tableau 6** ci-dessous représente une étude comparative de l'effet répulsif après 3 jours de mise en contact des termites avec le support imprégné d'un extrait de l'invention, sur les termites *H. indicola*, des extraits d'Ocotea rubra (grignon) en fonction de la nature du solvant utilisé.

Les chiffres indiqués représentent le nombre et la répartition des galeries dans le dispositif expérimental décrit ci-dessus (avec un intervalle de confiance pour 95%).

On compare l'effet répulsif d'un extrait grignon/pentane par rapport au pentane seul (témoin), d'un extrait grignon/dichlorométhane par rapport au diclorométhane seul (témoin), d'un extrait grignon/méthanol par rapport au méthanol seul (témoin).

**Tableau 6**

| Répartition | 0 cm | 2 cm | 3 cm | 4 cm |
|---|---|---|---|---|
| Pentane seul | 2,6 ± 0,5 | 9,2 ± 0,7 | 6,6 ± 1,0 | 5,0 ± 0,6 |
| Grignon dans pentane | 0 ± 0 | 3,0 ± 0,6 | 3,0 ± 0,6 | 4,0 ± 0,6 |
| Méthanol | 3,2 ± 0,4 | 3,2 ± 0,4 | 2,2 ± 0,4 | 3,6 ± 0,5 |
| Grignon dans méthanol | 0 ± 0 | 1,4 ± 0,5 | 1,4 ± 0,5 | 2,4 ± 0,5 |
| Dichlorométhane | 3,2 ± 0,4 | 3,0 ± 0,6 | 3,2 ± 0,4 | 3,8 ± 0,4 |
| Grignon dans dichlorométhane | 0 ± 0 | 1,8 ± 0,4 | 2,2 ± 0,4 | 2,8 ± 0,7 |

### Conclusion :

Afin d'affiner les résultats obtenus sur la sciure de bois, l'effet répulsif est étudié sur les différents extraits de *Ocotea rubra*, qui est l'essence la plus répulsive.

Les résultats obtenus montrent que l'effet maximal est obtenu avec les extraits méthanoliques.

### III. Effet anti-appétant

### Avec les extraits de bois

Le **tableau 7** ci-dessous représente l'effet antiappétant des extraits selon l'invention sur les termites. Plus particulièrement, il représente la consommation moyenne (en %) du support (substrat) par les 2 espèces de termites *R. santonensis* (R.s) et *H. indicola* (H.i) en fonction de la nature de l'extrait méthanolique (**figure 4**).

**Tableau 7**

| | 0 | 1 | 2 | 3 | 4 | 6 | 7 | 8 | 9 | 10 | 11 | 13 | 15 | 16 | 17 | 30 |
|---|---|---|---|---|---|---|---|---|---|---|---|---|---|---|---|---|
| Témoin | 0 | 0 | 0,5 | 12 | 23 | | 80 | 88 | 90,6 | 100 | 100 | | | 100 | | |
| Méthanol | 0 | 0 | 0,1 | 7 | 23 | | 88 | 96 | 100 | 100 | 100 | | | 100 | | |
| Rose (R.s) | 0 | 0 | 0 | 0 | | 0 | 0,2 | 0,6 | 0 | 1,6 | | 2,5 | | 5 | | |
| Grignon (R.s) | 0 | 0 | 0 | 0 | 1,7 | | 5,3 | 19 | 24,7 | 51,5 | 63,8 | | | 100 | | |
| Rose (H.i) | 0 | | | | 8 | | | | | 19 | | | | | | 19 |
| Grignon (H.i) | 0 | | | | 19 | | | | | 21 | | | | | | 21 |

Le tableau 7 est illustré par la **figure 4**.

### Conclusion :

Quel que soit le solvant d'extraction utilisé, on observe une faible mortalité dans les 2 extraits de bois, qu'ils soient purs ou dilués.

On note également, particulièrement dans les extraits méthanoliques, que les termites procèdent à un ensablement complet des morceaux de papier, imbibés des extraits *Aniba parviflora*, surtout aux dilutions 0 et 1/10^{ème}. On n'observe pas ce comportement pour les témoins, les contrôles avec le méthanol seul, ni même pour les extraits *Ocotea rubra*.

Les résultats obtenus montrent, pour chaque essence et pour chaque solvant, l'existence d'une réaction de type dose-réponse pour les 3 concentrations. On note que, pour chaque espèce de bois, quel que soit le solvant, les extraits n'ont pas d'action antiappétante pour des dilutions au 1/100^{ème}.

L'analyse des résultats obtenus et la comparaison des supports (substrats) consommés par les termites montrent que ce sont les extraits pentane/Grignon (*Ocotea rubra*) et méthanol/rose (*Aniba parviflora*) qui représentent les effets anti-appétants les plus nets.

### IV. Test de choix

### Avec les extraits de bois

Les résultats obtenus (**figure 5**) confirment ceux obtenus dans le test d'évaluation de l'effet anti-appétant puisque le papier imprégné d'extrait méthanolique de bois n'est pas du tout consommé par les termites après 7 jours de mise en contact des termites avec le support imprégné d'un extrait de bois selon l'invention.

### V. Conclusion

Les résultats obtenus montrent que pour les 2 espèces *Reticulitermes santonensis et Heterotermes indicola* les effets maximums sont obtenus avec :
- l'extrait méthanolique *Ocotea rubra* (Grignon) pour les effets répulsifs,
- l'extrait méthanolique *Aniba parviflora* (Rose) pour les effets toxiques,
- l'extrait méthanolique *Aniba parviflora* (Rose) pour les.effets antiappétants.

### C) EFFETS TOXIQUES, ANTIAPPETANTS ET REPULSIFS PRESENTES PAR DES EXTRAITS d'Aniba Parviflora VIS-A-VIS DES TERMITES.

### Méthodologie de l'extraction de l'essence Aniba parviflora :

Dans un fermenteur, 0,440 kg de sciure d'*Aniba parviflora* et 5 litres de méthanol sont agités pendant 15 heures. Après ce temps d'agitation, la filtration de ce mélange est effectuée. Le filtrat recueilli subit une évaporation ; 100 ml d'extrait méthanolique (consistance liquide) (équivalant à 87,5 g) sont alors obtenus.

### 1)Test de toxicité

### Méthodologie :

La mesure du pourcentage de mortalité, pour des essais menés en boîtes de Pétri de 5 cm, est effectuée à raison de 50 termites ouvriers par boîte (5 essais), à partir d'extraits méthanoliques d'*Aniba parviflora* pour *Reticulitermes santonensis* (R.s) et pour *Heterotermes indicola* (H.i).

### Observations :

Les termites ne creusent pas de galerie dans la sciure ; des mouvements anarchiques et rapides sont observés quelques minutes après le début de l'expérience. Les mouvements sont lents après 12 heures.

### Résultats :

Avec les extraits méthanoliques d'*Aniba parviflora*, les mesures du pourcentage de mortalité montrent un effet maximal de toxicité après 24 heures (voir tableau 8).

Le **tableau 8** ci-dessous représente le taux de mortalité (exprimé en pourcentage) pour les deux espèces de termites (R.s et H.i) à l'aide de l'extrait d'*Aniba parviflora*.

**Tableau 8**

| Temps | 0h | 12h | 24h | 36h | 48h | 3 jours |
|---|---|---|---|---|---|---|
| Témoin/H.i | 0 | 0 | 2 | 4 | 7 | 20 |
| Témoin/R.s | 0 | 11 | 14 | 31 | 32 | 40 |
| *Aniba parviflora*/H.i | 0 | 35 | 70 | 82 | 96 | 100 |
| *Aniba parviflora*/R.s | 0 | 77 | 97 | 100 | 100 | 100 |

### 2) Test de répulsivité

### Méthodologie :

Dans des boîtes de Pétri de 10 cm de diamètre, contenant du sable de Fontainebleau réhumidifié avec au centre un papier filtre imbibé d'extrait méthanolique *d'Aniba parviflora*. Les termites ouvriers, sont répartis dans les boîtes à raison de 50 par boîte, et 5 boîtes par essai.

L'effet répulsif est apprécié par l'observation et le comptage du nombre des galeries faites par les termites dans le sable. Le nombre de galeries coupant des cercles concentriques situés respectivement à 0 cm (centre), 2 cm, 3 cm ou 4 cm du centre, ont été mesurées. La mesure du nombre des galeries se fera après 1 à 8 jours.

Plus le nombre de galeries est petit et loin du centre, plus l'effet répulsif est fort. Inversement, plus le nombre de galeries est grand et près du centre, plus l'effet répulsif est faible. Lorsque aucune galerie n'est creusée, l'effet répulsif est maximum.

### Résultats :

*Aniba parviflora* a un effet répulsif par rapport au témoin vis-à-vis des termites *Reticulitermes santonensis* et de *Heterotermes indicola* (**figures 6, 7, 8 et 9**).

### 3) Effet antiappétant

### Méthodologie :

Les extraits *d'Aniba parviflora* sont déposés sur des carrés de papier Whatman de 1 cm² (papier Essai), dans des boîtes de Pétri de 10cm de diamètre, contenant du sable de Fontainebleau humide. On dépose également dans la même boîte un papier témoin qui n'est pas imbibé, à raison de 5 boîtes par espèce de termites (50 ouvriers par boîte).

L'effet anti-appétant est évalué par mesure de la surface de papier consommé en fonction du temps.

### Résultats :

Quelle que soit l'espèce de termites employée (R.s ou H.i), les termites procèdent à un ensablement plus ou moins complet des morceaux de papier imbibés des extraits d'*Aniba parviflora*. Ce comportement n'est pas observé pour les témoins.

Après 8 jours, les observations montrent un effet anti-appétant. En effet les papiers témoins sont ingérés à 100%, tandis que les papiers Essais ne sont pas consommés (0% de consommation).

### D) EFFETS TOXIQUES, ANTIAPPETANTS ET REPULSIFS PRESENTES PAR DES EXTRAITS CONTENANT UN MELANGE (Aniba Parviflora + Ocotea rubra) VIS-A-VIS DES TERMITES.

La méthodologie de l'extraction de l'essence *Aniba parviflora* est telle que décrite au point C) ci-dessus.

### Méthodologie de l'extraction de l'essence Ocotea rubra :

Dans un fermenteur, 2 kg de sciure d'*Ocotea rubra* et 10 litres de méthanol sont agités pendant 15 heures. Après ce temps d'agitation, la filtration de ce mélange est effectuée. Le filtrat recueilli subit une évaporation ; 300g d'extrait méthanolique (consistance pâteuse) sont alors obtenus.

### Préparation de l'extrait contenant le mélange (Aniba parviflora + Ocotea rubra) :

10 ml d'extrait méthanolique d'*Ocotea rubra* préparé selon la méthodologie décrite au paragraphe ci-dessus, sont mélangés à 10 ml d'extrait méthanolique d'*Aniba parviflora* préparé selon la méthodologie décrite au point C) ci-dessus, afin d'obtenir 20 ml d'extrait méthanolique contenant un mélange d'*Aniba parviflora* et d'*Ocotea rubra*. On prélève ensuite 1 ml de l'extrait ainsi obtenu et on le mélange à 9 ml de méthanol. 10 ml d'un extrait méthanolique contenant un mélange d'*Aniba parvifiora* et d'*Ocotea rubra* sont alors obtenus et testés quant à leur toxicité, répulsivité et antiappétance vis-à-vis des termites dans les points 1), 2) et 3) ci-dessous.

A titre illustratif, dans l'extrait tel que préparé ci-dessus, contenant le mélange (Aniba parviflora + Ocotea rubra), le rapport Aniba parviflora (A,p)/Ocotea rubra (O,r) est d'environ 40% en poids d'Aniba parviflora (A,p) et environ 60% en poids d'Ocotea rubra (O,r).

Selon un mode de réalisation avantageux de l'invention, l'extrait méthanolique tel que préparé ci-dessus, contenant le mélange (Aniba parviflora + Ocotea rubra), contient une quantité d'Aniba parviflora d'environ 50% en poids en moins par rapport à celle utilisée dans l'extrait méthanolique tel que préparé au point C) ci-dessus, contenant Aniba parviflora seul.

### 1) Test de Toxicité :

### Méthodologie :

Mesure du pourcentage de mortalité, pour des essais menés en boîtes de Pétri de 5cm, à raison de 50 termites ouvriers par boîte (5 essais), à partir d'un mélange d'extraits méthanoliques d'*Aniba parviflora* et d'*Ocotea rubra* tel que préparé ci-dessus, pour *Reticulitermes santonensis* (R.s) et pour *Heterotermes indicola* (H.i).

### Résultats :

Pour les deux espèces de termites testées, les mesures du pourcentage de mortalité montrent un effet maximal de toxicité après 24 heures avec le mélange d'extraits méthanoliques d'*Aniba parviflora* et d'*Ocotea rubra* (voir tableau 9).

Le **tableau 9** ci-dessous représente le taux de mortalité (exprimé en pourcentage) pour les deux espèces de termites (R.s et H.i) sur le mélange d'extraits méthanoliques d'*Aniba parviflora* et d'*Ocotea rubra*.

**Tableau 9**

| **Temps** | **0h** | **12h** | **24h** | **36h** | **48h** |
|---|---|---|---|---|---|
| *O. rubra + A. parviflora* (H.i) | 0 | 42 | 75 | 89 | 100 |
| *O. rubra + A. parviflora* (R.s) | 0 | 71 | 92 | 100 | 100 |
| Témoin H.i | 0 | 0 | 5 | 6 | 10 |
| Témoin R.s | 0 | 15 | 18 | 40 | 45 |

### 2) Test de répulsivité

### Méthodologie :

Dans des boîtes de Pétri de 10 cm de diamètre, contenant du sable de Fontainebleau réhumidifié, avec au centre un papier filtre imbibé du mélange d'extraits méthanoliques d'*Aniba parviflora* et d'*Ocotea rubra*. Les termites ouvriers, sont répartis dans les boîtes à raison de 50 par boîte, et 5 boîtes par espèce de termites.

L'effet répulsif est apprécié par l'observation et le comptage du nombre des galeries faites par les termites dans le sable. Le nombre de galeries coupant des cercles concentriques situés respectivement à 0 cm (centre), 2 cm, 3 cm ou 4 cm du centre, ont été mesurées. La mesure du nombre des galeries se fera après 1 à 8 jours.

Plus le nombre de galeries est petit et loin du centre, plus l'effet répulsif est fort. Inversement, plus le nombre de galeries est grand et près du centre, plus l'effet répulsif est faible. Lorsque aucune galerie n'est creusée, l'effet répulsif est maximum.

### Résultats :

Le mélange d'extraits méthanoliques d'*Aniba parviflora* et d'*Ocotea rubra* a un effet répulsif par rapport au témoin, vis-à-vis des termites *Reticulitermes santonensis* et *Heterotermes indicola* (**figures 10 et 11**).

### 3) Effet antiappétant

### Méthodologie :

Les mélanges d'extraits méthanoliques *d'Aniba parviflora* et *d'Ocotea rubra* sont déposés sur des carrés de papier Whatman de 1 cm² (papier Essai), dans des boîtes de Pétri de 10cm de diamètre, contenant du sable de Fontainebleau humide. On dépose également dans la même boîte un papier témoin qui n'est pas imbibé, à raison de 5 boîtes par espèce de termites (50 ouvriers par boîte).

L'effet anti-appétant est évalué par mesure de la surface de papier consommé en fonction du temps.

### Résultats :

Quelle que soit l'espèce de termites employée et testée (R.s ou H.i), les termites procèdent à un ensablement plus ou moins complet des morceaux de papier imbibés du mélange des extraits méthanoliques *d'Aniba parviflora* et *d'Ocotea rubra*. Ce comportement n'est pas observé pour les témoins.

Après 5 jours, les observations montrent un effet anti-appétant. En effet, les papiers témoins sont ingérés à 100% tandis que les papiers Essais ne sont pas consommés (0% de consommation).

### 4) Echelles respectives des quantités d'Aniba parviflora et d'Ocotea rubra utilisées en fonction de l'effet recherché

Le **tableau 10** ci-dessous illustre le fait qu'en fonction des quantités respectives d'*Aniba parviflora* et d'*Ocotea rubra* utilisées, l'extrait méthanolique de l'invention contenant un mélange d'*Aniba parviflora* et *d'Ocotea rubra* peut être utilisé dans des buts différents (titre préventif, titre curatif, ou préventif et curatif vis-à-vis des termites).

Les tests de toxicité, de répulsivité et d'antiappétance ont été effectués selon les méthodologies respectivement décrites au point D) ci-dessus, paragraphes 1), 2) et 3). Rappelons que la toxicité est exprimée (en %) par la mesure du taux de mortalité des termites, et que l'antiappétance est exprimée (en %) par la mesure de la surface du papier consommé par les termites en fonction du temps. Concernant la répulsivité, le terme « oui » dans le tableau 10 ci-dessous confirme que les différents extraits méthanoliques d'*Aniba parviflora* et d'*Ocotea rubra* sont répulsifs dans la mesure où aucun des termites ne s'approche du centre des boites de Pétri.

**Tableau 10**

| **Composition du mélange *Ocotea rubra (O.r.) + Aniba parviflora (A.p)*** | **80% O.r. et 20% A.p.** | **85% O.r. et 15% A.p.** | **90% O.r. et 10% A.p.** |
|---|---|---|---|
| Toxicité | 100% | 50% | 20% |
| Répulsivité | oui | oui | oui |
| Antiappétance | 5% | 30% | 70% |
| Traitement | Curatif | Préventif et/ou curatif | Préventif |

Ainsi, en fonction des quantités respectives d'*Aniba parviflora* et d'*Ocotea rubra* utilisées dans le mélange (O.r + A.p), différents effets peuvent être obtenus vis-à-vis des termites (effet préventif, effet curatif).

### E) COMPARAISON DE L'EFFET REPULSIF D'UN EXTRAIT METHANOLIQUE d'Aniba parviflora, ET d'UN EXTRAIT METHANOLIQUE CONTENANT LE MELANGE (Aniba parviflora + Ocotea rubra).

### Test de répulsivité

### Méthodologie

Dans des boîtes de Pétri de 10 cm de diamètre, contenant du sable de Fontainebleau réhumidifié avec au centre un papier filtre imbibé :
- d'extrait méthanolique d'*Aniba parviflora* ou,
- du mélange d'extraits méthanoliques d'*Aniba parviflora* et d'*Ocotea rubra*.

Les termites ouvriers, sont répartis dans les boîtes à raison de 50 par boîte, et 5 boîtes par essai.

L'appréciation de l'effet répulsif est effectuée selon la méthodologie décrite dans les points C) et D) paragraphe 2) ci-dessus.

La méthodologie de l'extraction de l'essence *Aniba parviflora* est telle que décrite au point C) ci-dessus. La préparation de l'extrait contenant le mélange (*Aniba parviflora + Ocotea rubra*) est telle que décrite au point D) ci-dessus.

### Résultats

Les résultats obtenus sont illustrés par les **figures 12** et **13**. Les figures 12 et 13 montrent que l'extrait méthanolique contenant le mélange (*Ocotea rubra + Aniba parviflora*) présente des effets répulsifs améliorés par rapport à l'extrait méthanolique contenant *Aniba* *parviflora* seul. En effet, après 1 jour et après 5 jours de mise en présence des termites (H.i ou R.s) avec l'extrait méthanolique contenant le mélange (*Ocotea rubra + Aniba parviflora*), le nombre de galeries diminue très fortement. *Ocotea rubra* améliore donc l'effet répulsif d'*Aniba parviflora*.

### F) EXEMPLES DE BOIS DE MÊME FAMILLE QUE CEUX DU GENRE ANIBA, MAIS NE POUVANT ÊTRE UTILISES EN TANT QU'INSECTICIDE.

Les bois du genre *Aniba* appartiennent à la famille des Lauracées. De même, les bois du genre *Ocotea* appartiennent à la famille des Lauracées. Cependant, un certain nombre de bois de la famille des Lauracées ne peuvent être utilisés en tant qu'insecticide, et notamment ne peuvent être utilisés pour lutter contre les termites.

Les exemples décrits ci-dessous concernent des bois appartenant à la famille des Lauracées, mais ne pouvant pas être utilisés pour lutter contre les termites.

### 1) Test de durabilité naturelle de bois massifs selon la norme « EN 350 »

Les espèces *Nectandra cymbarum, Nectandra grandis, Ocotea benthamiana, Ocotea oblonga, Ocotea globifera* sont testées ci-dessous sous forme de bois massifs.

A titre indicatif, les bois *Nectandra grandis, Ocotea benthamiana, Ocotea oblonga, Ocotea globifera* sont des arbres trouvés en Guyanne, et *Nectandra cymbarum* est un arbre trouvé au Brésil.

L'évaluation de la durabilité naturelle du bois est effectuée dans l'exemple ci-après selon la norme « EN 350 » (« NF EN 350/Juillet 1994 : Durabilité du bois et des matériaux dérivés du bois. Durabilité naturelle du bois massif ») dont les modalités sont indiquées ci-dessous. A titre indicatif, la norme « EN 350 » se compose de 2 parties :
- la norme NF EN 350-1, Partie 1 : Guide des principes d'essai et de classification de la durabilité naturelle du bois *(AFNOR 1994 -1*^{*ER*} *TIRAGE 94-07)*,
- la norme NF EN 350-2, Partie 2 : Guide de la durabilité naturelle du bois et de l'imprégnabilité d'essences de bois choisies pour leur importance en Europe (*AFNOR 1994-1*^{*ER*} *TIRAGE 94-07)*.

Pour décrire la durabilité naturelle du bois, plusieurs systèmes de classification sont utilisés dans la norme « EN350 ». Ils indiquent le comportement relatif de chaque essence de bois en ce qui concerne la résistance intrinsèque de chaque essence de bois aux attaques d'organismes destructeurs, tels que les champignons, les insectes et les térébrants marins.

Pour classifier la durabilité naturelle du bois vis-à-vis des termites, on utilise une classification à trois niveaux :

| Classes de durabilité | Description |
|---|---|
| D | Durable |
| M | Moyennement durable |
| S | Sensible |

La résistance du bois à l'attaque des termites est évaluée en utilisant une procédure dérivée de la norme « EN118 » (« Norme NF EN 118/Juin 1990 : Produits de préservation des bois. Détermination de l'efficacité préventive contre *Reticulitermes santonensis* de Feytaud (Méthode de laboratoire) *(AFNOR 1990-1*^{*ER*} *TIRAGE 90-06)* »).

Les classes de durabilité naturelle du bois vis-à-vis des termites selon des essais selon la norme « EN 118 » sont indiquées ci-dessous :

| Classes de durabilité | Description | Cotation moyenne |
|---|---|---|
| D | Durable | 0-1 |
| M | Moyennement durable | 2 |
| S | Sensible | 3-4 |

La cotation moyenne est indiqué plus en détails ci-après :
0 : aucune attaque,
1 : tentative d'attaque - effleurage superficiel de profondeur échappant à toute mesure,
2 : attaque légère - attaque superficielle (< 1 mm) et limitée en étendue à au plus ¼ de la surface exposée, ou forage unique de profondeur inférieure à 3 mm à l'exclusion de toute autre trace d'attaque,
3 : attaque moyenne - attaque superficielle (< 1 mm) et s'étendant sur plus de ¼ de la surface exposée, ou érosion (de 1 mm à 3 mm) sur une surface inférieure ou égale au ¼, ou forages ponctuels supérieurs à 3 mm mais ne s'étendant pas en cavernes et non traversants,
4 : attaque forte - érosion sur plus du ¼ de la surface exposée, ou attaque pénétrante supérieure à 3 mm s'étendant en cavernes dans la masse de l'éprouvette, ou ne s'étendant pas en cavernes mais traversante.

### Résultats et conclusion :

Les résultats obtenus lors des tests de durabilité naturelle montrent que les bois *Nectandra cymbarum, Nectandra grandis, Ocotea benthamiana* et *Ocotea oblonga* sont sensibles vis-à-vis des termites. Le bois *Ocotea globifera* est moyennement durable vis-à-vis des termites.

Selon un mode de réalisation avantageux de l'invention, les résultats obtenus lors des tests de durabilité naturelle montrent que les bois du genre *Aniba,* et notamment de l'espèce *parviflora (Aniba parviflora)*, ainsi que les bois du genre *Ocotea,* et notamment de l'espèce *rubra (Ocotea rubra)* sont durables vis-à-vis des termites.

### 2) Tests de toxicité et de répulsivité de Laurus nobilis (Laurier sauce).

Le Laurier sauce est un arbuste que l'on rencontre fréquemment en France, appartenant à la famille des Lauracées.

### Méthodologie

Les tests de toxicité et de répulsivité ont été effectués sur de la sciure de Laurier sauce selon les méthodologies respectivement décrites au point A) ci-dessus, paragraphes I.1) et II.1).

### Résultats

### • Tests de toxicité

Les résultats obtenus sont illustrés dans le **tableau 11** ci-dessous, et représentent le pourcentage de mortalité. On constate qu'il n'y a pas de mortalité (15% pour *H.i*. et 22% pour *R*.*s*.) après 2 jours de mise en présence des termites avec le laurier. En effet, 2 jours est le seuil de toxicité pour *Ocotea rubra et Aniba parviflora*.

**Tableau 11**

| | | | | | | | | |
|---|---|---|---|---|---|---|---|---|
| **Temps (jours)** | **0** | **0.5** | **1** | **1.5** | **2** | **3** | **5** | **10** |
| **Témoin (peuplier) *(H.i)*** | 0 | 0 | 2 | 4 | 8 | 20 | 65 | .82 |
| **Témoin (peuplier) *(R.s)*** | 0 | 0 | 3 | 8 | 15 | 22 | 69 | 76 |
| ***Laurus nobilis (H.i)*** | 0 | 0 | 3 | 6 | 15 | 17 | 68 | 78 |
| ***Laurus nobilis (R.s)*** | 0 | 0 | 4 | 12 | 22 | 31 | 75 | 82 |

### Conclusion :

Le Laurier sauce n'est pas toxique vis-à-vis des 2 espèces de termites (R.s et H.i).

### • Tests de répulsivité

Les résultats obtenus sont illustrés dans le **tableau 12** ci-dessous. On constate qu'après 1 jour, il y a présence de galeries près du centre.

**Tableau 12**

| **Temps** | ***0cm*** | ***2cm*** | ***3cm*** | ***4cm*** | ***Périphérie*** |
|---|---|---|---|---|---|
| **0 jour** | 0 | 0 | 0 | 0 | 0 |
| **1 jour *(H.i)*** | 3 | 4 | 5 | 3 | 5 |
| **1 jour *(R.s.)*** | 2 | 2 | 3 | 2 | 5 |

### Conclusion :

Le Laurier sauce n'est pas répulsif vis-à-vis des 2 espèces de termites (R.s et H.i).

Les résultats donnés dans les tableaux 11 et 12 ci-dessus indiquent donc que le Laurier sauce ne présente pas d'effet de toxicité ou de répulsivité vis-à-vis des termites.

### G) CONCLUSION

La présente invention permet de fournir un moyen de lutte contre les termites particulièrement avantageux, présentant à la fois des effets répulsifs, toxiques et antiappétants vis-à-vis des termites, n'engendrant pas de pollution de l'environnement, et permettant la valorisation de l'industrie en Amérique du Sud, et notamment en Guyanne (région à faible développement industriel), par l'exploitation des déchets ligneux d'espèces particulièrement abondantes dans ces régions (*Ocotea rubra*) et de bois de plantation d'*Aniba parviflora* (essence de reboisement).

## Revendications

1. Utilisation de bois du genre *Aniba*, et notamment de l'espèce *parviflora* (*Aniba parviflora*), en tant qu'insecticide.

2. Utilisation selon la revendication 1, **caractérisée en ce que** le bois du genre *Aniba* est associé à un agent de charge n'affectant pas les propriétés insecticides des bois du genre *Aniba,* l'agent de charge étant du bois du genre *Ocotea,* et notamment de l'espèce *rubra* (*Ocotea rubra*).

3. Utilisation selon la revendication 1 ou 2, **caractérisée en ce que** le bois est sous la forme de sous-produits de sciage tels que morceaux, copeaux, poudres et/ou sciures de bois, les morceaux de bois étant des parties ou parcelles de bois présentant une taille allant de 0,5 cm à 15 cm d'épaisseur, de 5 cm à 200 cm de longueur, et de 4 cm à 20 cm de largeur par morceau, les copeaux de bois étant des parcelles de bois de taille allant de 0,5 mm à 5 mm d'épaisseur, de 0,5 cm à 5 cm de longueur, et de 0,5 cm à 4 cm de largeur par copeau, les poudres de bois étant des particules de bois de taille allant de 0,2 mm à 1 mm et les sciures de bois étant des particules de bois présentant une taille allant de 1 mm à 5 mm.

4. Utilisation selon la revendication 1 ou 2, **caractérisée en ce que** le bois est sous la forme d'au moins un extrait de bois dans un solvant polaire ou non polaire ou un mélange de solvants.

5. Utilisation selon la revendication 4, **caractérisée en ce que** le solvant polaire présente une polarité allant de 3,5 à 9 (établie selon les normes définies dans « Godfrey, Norman B., « Solvent Selection via Miscibility Number », CHEMTECH, 359-363 (1972) »), et est notamment choisi dans le groupe constitué par :
- les alcools ayant de 1 à 8 atomes de carbone, tels que l'éthanol, le propanol, le butanol, l'alcool benzylique, le méthoxyéthanol ou leurs mélanges, et notamment le méthanol,
- les cétones ayant de 1 à 7 atomes de carbone, et notamment l'acétone, la méthyle éthyle cétone, le cyclohexanone ou leurs mélanges,
- les acétates d'alkyle ayant de 1 à 6 atomes de carbone, et notamment les acétates de méthyle et d'éthyle ou leurs mélanges,
- le chlorure d'éthylène, le tétrahydrofuranne, le nitrobenzène, le benzonitrile, le p-dioxane, la pyridine, le nitroéthane, l'acétonitrile, l'acide acétique, le diméthylformamide, le diméthylsulfoxyde, le formamide, l'eau ou leurs mélanges,
- ou un mélange d'au moins 2 des susdits solvants.

6. Utilisation selon la revendication 4, **caractérisée en ce que** le solvant non polaire est choisi dans le groupe constitué par le dichlorométhane, le pentane, le benzène, l'hexane, le toluène ou leur mélange.

7. Utilisation selon l'une quelconque des revendications 1 à 6, pour lutter contre tout insecte xylophage, et notamment contre les isoptères tels que les termites, et contre les coléoptères tels que les vrillettes, les capricornes et les bostryches.

8. Extrait de bois **caractérisé en ce qu'**il comprend, dans un solvant polaire ou non polaire ou un mélange de solvants, du bois du genre *Aniba*, et en particulier de l'espèce *parviflora* (*Aniba parviflora*), et éventuellement un agent de charge n'affectant pas les propriétés insecticides des bois du genre *Aniba,* et notamment améliorant l'effet répulsif des bois du genre *Aniba*, ledit agent de charge étant du bois du genre *Ocotea,* et notamment de l'espèce *rubra* (*Ocotea rubra*).

9. Extrait selon la revendication 8, **caractérisé en ce que** le solvant polaire présente une polarité allant de 3,5 à 9, (établie selon les normes définies dans « Godfrey, Norman B., « Solvent Selection via Miscibility Number », CHEMTECH, 359-363 (1972) ») et est notamment choisi dans le groupe constitué par :
- les alcools ayant de 1 à 8 atomes de carbone, tels que l'éthanol, le propanol, le butanol, l'alcool benzylique, le méthoxyéthanol ou leurs mélanges, et notamment le méthanol,
- les cétones ayant de 1 à 7 atomes de carbone, et notamment l'acétone, la méthyle éthyle cétone, le cyclohexanone ou leurs mélanges,
- les acétates d'alkyle ayant de 1 à 6 atomes de carbone, et notamment les acétates de méthyle et d'éthyle ou leurs mélanges,
- le chlorure d'éthylène, le tétrahydrofuranne, le nitrobenzène, le benzonitrile, le p-dioxane, la pyridine, le nitroéthane, l'acétonitrile, l'acide acétique, le diméthylformamide, le diméthylsulfoxyde, le formamide, l'eau ou leurs mélanges,
- ou un mélange d'au moins 2 des susdits solvants.

10. Extrait selon la revendication 8, **caractérisé en ce que** le solvant non polaire est choisi dans le groupe constitué par le dichlorométhane, le pentane, le benzène, l'hexane, le toluène ou leur mélange.

11. Composition insecticide, notamment termicide, **caractérisée en ce qu'**elle contient des sous-produits de sciage de bois tels que morceaux, copeaux, poudres et/ou sciures de bois provenant du genre *Aniba*, et en particulier de l'espèce *parviflora* ('*Aniba*' *parviflora*), **caractérisée en ce qu'**elle contient un agent de charge n'affectant pas les propriétés insecticides des bois du genre *Aniba,* et notamment améliorant l'effet répulsif des bois du genre *Aniba,* ledit agent de charge étant sous la forme de sous-produits de sciage de bois du genre *Ocotea,* et notamment de l'espèce *rubra* (*Ocotea rubra*), les morceaux de bois étant des parties ou parcelles de bois présentant une taille allant de 0,5 cm à 15 cm d'épaisseur, de 5 cm à 200 cm de longueur, et de 4 cm à 20 cm de largeur par morceau, les copeaux de bois étant des parcelles de bois de taille allant de 0,5 mm à 5 mm d'épaisseur, de 0,5 cm à 5 cm de longueur, et de 0,5 cm à 4 cm de largeur par copeau, les poudres de bois étant des particules de bois de taille allant de 0,2 mm à 1 mm et les sciures de bois étant des particules de bois présentant une taille allant de 1 mm à 5 mm.

12. Composition insecticide, notamment termicide, **caractérisée en ce qu'**elle contient au moins un extrait de bois selon l'une des revendications 8 à 10.

13. Procédé de préparation d'un extrait selon l'une des revendications 8 à 10, ou d'un extrait entrant dans une composition selon la revendication 12, **caractérisé en ce qu'**il comprend les étapes suivantes :
◆ on extrait des sous-produits de sciage de bois tels que morceaux, copeaux, poudres et/ou sciures de bois provenant du genre *Aniba,* et en particulier de l'espèce *parviflora* (*Aniba parviflora*), et éventuellement de bois n'affectant pas les propriétés insecticides des bois du genre *Aniba,* et notamment améliorant l'effet répulsif des bois du genre *Aniba,* tels que les bois du genre *Ocotea,* et notamment de l'espèce *rubra* (*Ocotea rubra*), les morceaux de bois étant des parties ou parcelles de bois présentant une taille allant de 0,5 cm à 15 cm d'épaisseur, de 5 cm à 200 cm de longueur, et de 4 cm à 20 cm de largeur par morceau, les copeaux de bois étant des parcelles de bois de taille allant de 0,5 mm à 5 mm d'épaisseur, de 0,5 cm à 5 cm de longueur, et de. 0,5 cm à 4 cm de largeur par copeau, les poudres de bois étant des particules de bois de taille allant de 0,2 mm à 1 mm et les sciures de bois étant des particules de bois présentant une taille allant de 1 mm à 5 mm,
à l'aide d'au moins un solvant polaire ou non polaire, ledit solvant polaire présentant notamment une polarité allant de 3,5 à 9 (établie selon les normes définies dans « Godfrey, Norman B., « Solvent Selection via Miscibility Number », CHEMTECH, 359-363 (1972) »), et notamment choisi dans le groupe constitué par :
- les alcools ayant de 1 à 8 atomes de carbone, tels que l'éthanol, le propanol, le butanol, l'alcool benzylique, le méthoxyéthanol ou leurs mélanges, et notamment le méthanol,
- les cétones ayant de 1 à 7 atomes de carbone, et notamment l'acétone, la méthyle éthyle cétone, le cyclohexanone où leurs mélanges,
- les acétates d'alkyle ayant de 1 à 6 atomes de carbone, et notamment les acétates de méthyle et d'éthyle ou leurs mélanges,
- le chlorure d'éthylène, le tétrahydrofuranne, le nitrobenzène, le benzonitrile, le p-dioxane, la pyridine, le nitroéthane, l'acétonitrile, l'acide acétique, le diméthylformamide, le diméthylsulfoxyde, le formamide, l'eau ou leurs mélanges,
- ou un mélange d'au moins 2 des susdits solvants,
ledit solvant non polaire étant notamment choisi dans le groupe constitué par le pentane, le dichlorométhane, le benzène, l'hexane, le toluène ou leur mélange
pendant un temps variant de 10 minutes à 36 heures, à une température variant de 10°C à 80°C pour obtenir un mélange comportant les sous-produits de sciage du bois,
◆ on élimine les sous-produits de sciage du bois du mélange obtenu à l'étape précédente, notamment par filtration, pour obtenir l'extrait de l'invention,
◆ on évapore éventuellement l'extrait obtenu à l'étape précédente afin d'obtenir un extrait sec ou concentré.

14. Support imprégné d'un extrait selon les revendications 8 à 10, ou d'une composition selon l'une des revendications 11 ou 12, **caractérisé en ce qu'**il contient de la cellulose, et est notamment choisi dans le groupe constitué par le bois tel que les conifères (par exemple pin sylvestre, pin maritime), les feuillus (par exemple peuplier), le papier, les éthers ou esters de cellulose tels que la méthylcellulose, l'hydroxypropylméthylcellulose et l'hydroxybutylméthylcellulose, ou **en ce qu'**il contient des matières plastiques telles que le polypropylène, le polyuréthane, le polyéthylène, le polychlorure de vinyle, et **caractérisé en ce qu'**il est imprégné d'une quantité d'extrait provenant d'une quantité de bois supérieure à un dixième de la quantité de support, et notamment d'une quantité d'extrait provenant d'une quantité de bois variant de un dixième à 100 fois la quantité de support.

15. Utilisation d'un extrait selon l'une des revendications 8 à 10, ou d'une composition selon l'une des revendications 11 ou 12, sous une forme appropriée à une application par pulvérisation.

## Patentansprüche

1. Verwendung von Holz der Gattung *Aniba* und insbesondere der Art *parviflora* (*Aniba parviflora*) als Insektizid.

2. Verwendung nach Anspruch 1, **dadurch gekennzeichnet, dass** das Holz der Gattung *Aniba* mit einem Zusatzmittel versehen ist, das die insektiziden Eigenschaften des Holzes der Gattung *Aniba* nicht beeinflusst, wobei das Zusatzmittel ein Holz der Gattung *Ocotea* und insbesondere der Art *rubra* (*Ocotea rubra*) ist.

3. Verwendung nach Anspruch 1 oder 2, **dadurch gekennzeichnet, dass** das Holz in Form von Sägenebenprodukten vorliegt, wie Stücken, Spänen, Pulvern und/oder Sägemehl, wobei die Holzstücke Teile oder Abschnitte von Holz sind, die eine Abmessung von 0,5 cm bis 15 cm Dicke, 5 cm bis 200 cm Länge und 4 cm bis 20 cm Breite pro Stück haben, die Holzspäne Holzstückchen mit 0,5 mm bis 5 mm Dicke, 0,5 cm bis 5 cm Länge und 0,5 cm bis 4 cm Breite pro Span sind, die Holzpulver Holzteilchen mit Abmessungen von 0,2 mm bis 1 mm und das Sägemehl Holzteilchen mit einer Größe von 1 mm bis 5 mm sind.

4. Verwendung nach Anspruch 1 oder 2, **dadurch gekennzeichnet, dass** das Holz in Form wenigstens eines Holzextraktes in einem polaren oder nicht-polaren Lösungsmittel oder einer Mischung von Lösungsmitteln vorliegt.

5. Verwendung nach Anspruch 4, **dadurch gekennzeichnet, dass** das polare Lösungsmittel eine Polarität von 3,5 bis 9 hat, (bestimmt nach den Normen, die in Godfrey, Norman B., "Solvent Selection via Miscibility Number", CHEMTECH, 359-363 (1972) definiert sind) und insbesondere ausgewählt ist aus der Gruppe, die gegeben ist durch:
- Alkohole mit 1 bis 8 Kohlenstoffatomen wie Äthanol, Propanol, Butanol, Benzylalkohol, Methoxyäthanol oder ihre Mischungen und insbesondere Methanol,
- Ketone mit 1 bis 7 Kohlenstoffatomen, insbesondere Aceton, Methylethylketon, Cyclohexanon oder ihre Mischungen,
- Alkylacetate mit 1 bis 6 Kohlenstoffatomen und insbesondere Methyl- und Ethylacetate oder ihre Mischungen,
- Chlorethylen, Tetrahydrofuran, Nitrobenzol, Benzonitril, p-Dioxan, Pyridin, Nitroethan, Acetonitril, Essigsäure, Dimethylformamid, Dimethylsulfoxid, Formamid, Wasser oder ihre Mischungen,
- oder eine Mischung aus wenigstens zwei der erwähnten Lösungsmittel.

6. Verwendung nach Anspruch 4, **dadurch gekennzeichnet, dass** das nicht-polare Lösungsmittel ausgewählt aus der Gruppe ist, die durch Di-Chlormethan, Pentan, Benzol, Hexan, Toluen oder ihre Mischungen gegeben ist.

7. Verwendung nach einem der Ansprüche 1 bis 6, um jegliches holzfressendes Insekt zu bekämpfen, insbesondere Isopteren wie die Termiten und Käfer wie Nagekäfer, Hausbock und Borkenkäfer.

8. Holzextrakt **dadurch gekennzeichnet, dass** es in einem polaren oder nicht-polaren oder in einer Mischung von Lösungsmitteln Holz der Gattung *Aniba,* insbesondere der Art *parviflora* (*Aniba parviflora*) und gegebenenfalls ein Zusatzmittel enthält, das die insektiziden Eigenschaften des Holzes der Gattung *Aniba* nicht beeinflusst und insbesondere die abweisende Wirkung des Holzes der Gattung *Aniba* verbessert, wobei das Zusatzmittel aus einem Holz der Gattung *Ocotea* ist, insbesondere der Art *rubra* (*Ocotea rubra*).

9. Extrakt nach Anspruch 8, **dadurch gekennzeichnet, dass** das polare Lösungsmittel eine Polarität von 3,5 bis 9 hat (bestimmt nach den Normen, die in Godfrey Norman B., "Solvent Selection via Miscibility Number", CHEMTECH, 359-363 (1972) definiert sind) und insbesondere aus der Gruppe ausgewählt ist, die gegeben ist durch:
- Alkohole mit 1 bis 8 Kohlenstoffatomen wie Äthanol, Propanol, Butanol, Benzylalkohol, Methoxyäthanol oder ihre Mischungen und insbesondere Methanol,
- Ketone mit 1 bis 7 Kohlenstoffatomen, insbesondere Aceton, Methylethylketon, Cyclohexanon oder ihre Mischungen,
- Alkylacetate mit 1 bis 6 Kohlenstoffatomen und insbesondere Methyl- und Ethylacetate oder ihre Mischungen,
- Chlorethylen, Tetrahydrofuran, Nitrobenzol, Benzonitril, p-Dioxan, Pyridin, Nitroethan, Acetonitril, Essigsäure, Dimethylformamid, Dimethylsulfoxid, Formamid, Wasser oder ihre Mischungen,
- oder eine Mischung aus wenigstens zwei der erwähnten Lösungsmittel.

10. Extrakt nach Anspruch 8, **dadurch gekennzeichnet, dass** das nicht-polare Lösungsmittel ausgewählt wird aus der Gruppe, die aus Di-Chlormethan, Pentan, Benzol, Hexan, Toluen oder ihren Mischungen besteht.

11. Insektizidzusammensetzung, insbesondere Termizid, **dadurch gekennzeichnet, dass** sie Holzsägenebenprodukte enthält, wie Stücke, Späne, Pulver und/oder Sägemehl, die von der Gattung *Aniba* und insbesondere der Art *parviflora (Aniba parviflora)* stammen, **dadurch gekennzeichnet, dass** sie ein Zusatzmittel enthält, das die insektiziden Eigenschaften des Holzes der Gattung *Aniba* nicht beeinflusst und insbesondere die abweisende Wirkung des Holzes der Gattung *Aniba* verbessert, wobei das Zusatzmittel in Form von Sägenebenprodukten des Holzes der Gattung *Ocotea* insbesondere der Art *rubra (Ocotea rübra)* vorliegt, wobei die Holzstücke Teile oder Abschnitte von Holz sind, die eine Abmessung von 0,5 cm bis 15 cm Dicke, 5 cm bis 200 cm Länge und 4 cm bis 20 cm Breite pro Stück haben, die Holzspäne Holzstückchen mit 0,5 mm bis 5 mm Dicke, 0,5 cm bis 5 cm Länge und 0,5 cm bis 4 cm Breite pro Span sind, die Holzpulver Holzteilchen mit Abmessungen von 0,2 mm bis 1 mm und das Sägemehl Holzteilchen mit einer Größe von 1 mm bis 5 mm sind.

12. Insektizidzusammensetzung, insbesondere Thermizid, **dadurch gekennzeichnet, dass** sie wenigstens ein Holzextrakt gemäß einem der Ansprüche 8 bis 10 aufweist.

13. Verfahren zur Herstellung eines Extraktes gemäß einem der Ansprüche 8 bis 10 oder eines Extraktes, der in einer Zusammensetzung gemäß Anspruch 12 vorhanden ist, **dadurch gekennzeichnet, dass** es folgende Schritte umfasst:
• man extrahiert Holzsägenebenprodukte, wie Stücke, Späne, Pulver und/oder Sägemehl, die von der Gattung *Aniba,* und insbesondere der Art *parviflora (Aniba parviflora)*, und gegebenfalls von einem Holz stammen, das die insektiziden Eigenschaften des Holzes der Gattung *Aniba* nicht beeinflusst, insbesondere die abweisende Wirkung des Holzes der Art *Aniba* verbessert wie ein Holz der Gattung *Ocotea* und insbesondere der Art *rubra* (*Ocotea rubra*), wobei die Holzstücke Teile oder Abschnitte von Holz sind, die eine Abmessung von 0,5 cm bis 15 cm Dicke, 5 cm bis 200 cm Länge und 4 cm bis 20 cm Breite pro Stück haben, die Holzspäne Holzstückchen mit 0,5 mm bis 5 mm Dicke, 0,5 cm bis 5 cm Länge und 0,5 cm bis 4 cm Breite pro Span sind, die Holzpulver Holzteilchen mit Abmessungen von 0,2 mm bis 1 mm und das Sägemehl Holzteilchen mit einer Größe von 1 mm bis 5 mm sind,
mit Hilfe von wenigstens einem polaren oder nicht-polaren Lösungsmittel, wobei das polare Lösungsmittel insbesondere eine Polarität von 3,5 bis 9 hat (bestimmt nach den Normen, die in Godfrey Norman B., "Solvent Selection via Miscibility Number", CHEMTECH, 359-363 (1972) definiert sind) und insbesondere aus der Gruppe ausgewählt ist, die gegeben ist durch:
- Alkohole mit 1 bis 8 Kohlenstoffatomen wie Äthanol, Propanol, Butanol, Benzylalkohol, Methoxyäthanol und ihre Mischungen und insbesondere Methanol,
- Ketone mit 1 bis 7 Kohlenstoffatomen, insbesondere Aceton, Methylethylketon, Cyclohexanon oder ihre Mischungen,
- Alkylacetate mit 1 bis 6 Kohlenstoffatomen und insbesondere Methyl- und Ethylacetate oder ihre Mischungen,
- Chlorethylen, Tetrahydrofuran, Nitrobenzol, Benzonitril, p-Dioxan, Pyridin, Nitroethan, Acetonitril, Essigsäure, Dimethylformamid, Dimethylsulfoxid, Formamid, Wasser oder ihre Mischungen,
- oder eine Mischung aus wenigstens zwei der erwähnten Lösungsmittel,
wobei das nicht-polare Lösungsmittel aus der Gruppe ausgewählt wird, die durch Pentan, Di-Chloromethan, Benzol, Hexan, Toluen oder ihre Mischungen gegeben ist,
während einer Zeit zwischen 10 Minuten und 36 Stunden bei einer Temperatur zwischen 10°C und 80°C, um eine Mischung zu erhalten, die die Holzsägenebenprodukte enthält,
• man eliminiert die Holzsägenebenprodukte aus der im vorigen Schritt erhaltenen Mischung, insbesondere durch Filtration, um das Extrakt gemäß der Erfindung zu erhalten,
• man verdampft gegebenenfalls das beim vorhergehenden Schritt erhaltene Extrakt, um ein trockenes oder konzentriertes Extrakt zu erhalten.

14. Träger, der mit einem Extrakt gemäß den Ansprüchen 8 bis 10 oder einer Zusammensetzung gemäß den Ansprüchen 11 oder 12 imprägniert ist, **dadurch gekennzeichnet, dass** er Zellulose enthält und insbesondere aus der Gruppe ausgewählt ist, die enthält: Holz wie Koniferen (z.B. Föhre, Strandkiefer), Laubbäume (z.B. Pappel), Papier, die Ether oder Ester von Zellulose wie Methylzellulose, Hydroxypropylmethylzellulose, Hydroxybutylmethylzellulose oder dass er Kunststoffmaterialien enthält wie Polypropylen, Polyurethan, Polyethylen, Polyvinylchlorid, und **gekennzeichnet dadurch, dass** er mit einer Menge Extrakt, die von einer Holzmenge herrührt, die höher als das Zehnfache der Menge des Trägers ist und insbesondere mit einer Extraktmenge, die von einer Holzmenge herrührt, die das Zehn- bis Einhundertfache der Menge des Trägers ist, imprägniert ist.

15. Verwendung eines Extraktes nach einem der Ansprüche 8 bis 10 oder einer Zusammensetzung nach einem der Ansprüche 11 oder 12 in einer Form, die für das Aufbringen durch Zerstäubung geeignet ist.

## Claims

1. Use of wood from the genus *Aniba,* and in particular from the species *parviflora* (*Aniba parviflora*), as an insecticide.

2. Use according to claim 1, **characterized in that** the wood from the genus *Aniba* is combined with a bulking agent not affecting the insecticidal properties of woods from the genus *Aniba,* the bulking agent being wood from the genus *Ocotea,* and in particular from the species *rubra* (*Ocotea rubra*).

3. Use according to claim 1 or 2, **characterized in that** the wood is in the form of by-products of sawing, such as lumps, chips, powders and/or sawdust, the lumps of wood being pieces or fragments of wood having a size ranging from 0.5 cm to 15 cm in thickness, from 5 cm to 200 cm in length and from 4 cm to 20 cm in width per lump, the wood chips being fragments of wood ranging in size from 0.5 mm to 5 mm in thickness, from 0.5 cm to 5 cm in length and from 0.5 cm to 4 cm in width per chip, the wood powders being particles of wood ranging in size from 0.2 mm to 1 mm and the sawdust being particles of wood having a size ranging from 1 mm to 5 mm.

4. Use according to claim 1 or 2, **characterized in that** the wood is in the form of at least one extract of wood in a polar or non-polar solvent or a mixture of solvents.

5. Use according to claim 4, **characterized in that** the polar solvent has a polarity ranging from 3.5 to 9 (established according to the standards defined in "Godfrey, Norman B. "Solvent Selection via Miscibility Number", CHEMTECH, 359-363 (1972)"), and is in particular chosen from the group constituted by:
- alcohols having from 1 to 8 carbon atoms, such as ethanol, propanol, butanol, benzyl alcohol, methoxyethanol or their mixtures, and in particular methanol,
- ketones having from 1 to 7 carbon atoms, and in particular acetone, methyl ethyl ketone, cyclohexanone or their mixtures,
- alkyl acetates having from 1 to 6 carbon atoms and in particular methyl and ethyl acetates or their mixtures,
- ethylene chloride, tetrahydrofuran, nitrobenzene, benzonitrile, p-dioxan, pyridine, nitroethane, acetonitrile, acetic acid, dimethylformamide, dimethylsulphoxide, formamide, water or their mixtures,
- or a mixture of at least 2 of the abovementioned solvents.

6. Use according to claim 4, **characterized in that** the non-polar solvent is chosen from the group constituted by dichloromethane, pentane, benzene, hexane, toluene or their mixtures.

7. Use according to any one of claims 1 to 6, for combating any xylophagous insect, and in particular the isoptera such as termites, and the coleoptera such as furniture beetles, longhorn beetles and powder-post beetles.

8. Extract of wood **characterized in that** it comprises, in a polar or non-polar solvent or a mixture of solvents, wood from the genus *Aniba,* and in particular from the species *parviflora* (*Aniba parviflora*), and optionally a bulking agent not affecting the insecticidal properties of woods from the genus *Aniba,* and in particular improving the repellent effect of woods from the genus *Aniba,* the bulking agent being wood from the genus *Ocotea,* and in particular from the species *rubra* (*Ocotea rubra*).

9. Extract according to claim 8, **characterized in that** the polar solvent has a polarity ranging from 3.5 to 9, (established according to the standards defined in "Godfrey, Norman B. "Solvent Selection via Miscibility Number", CHEMTECH, 359-363 (1972)"), and is in particular chosen from the group constituted by:
- alcohols having from 1 to 8 carbon atoms, such as ethanol, propanol, butanol, benzyl alcohol, methoxyethanol or their mixtures, and in particular methanol,
- ketones having from 1 to 7 carbon atoms, and in particular acetone, methyl ethyl ketone, cyclohexanone or their mixtures,
- alkyl acetates having from 1 to 6 carbon atoms and in particular methyl and ethyl acetates or their mixtures,
- ethylene chloride, tetrahydrofuran, nitrobenzene, benzonitrile, p-dioxan, pyridine, nitroethane, acetonitrile, acetic acid, dimethylformamide, dimethylsulphoxide, formamide, water or their mixtures,
- or a mixture of at least 2 of the abovementioned solvents.

10. Extract according to claim 8, **characterized in that** the non-polar solvent is chosen from the group constituted by dichloromethane, pentane, benzene, hexane, toluene or their mixtures.

11. Insecticidal, in particular termicidal, composition **characterized in that** it contains by-products of wood sawing, such as lumps, chips, powders and/or sawdust originating from the genus *Aniba*, and in particular from the species *parviflora* (*Aniba* parviflora), **characterized in that** it contains a bulking agent not affecting the insecticidal properties of woods from the genus *Aniba,* and in particular improving the repellent effect of woods from the genus *Aniba,* said bulking agent being in the form of by-products of the sawing of wood from the genus *Ocotea,* and in particular from the species *rubra* (*Ocotea rubra*), the lumps of wood being pieces or fragments of wood having a size ranging from 0.5 cm to 15 cm in thickness, from 5 cm to 200 cm in length and from 4 cm to 20 cm in width per lump, the wood chips being fragments of wood ranging in size from 0.5 mm to 5 mm in thickness, from 0.5 cm to 5 cm in length and from 0.5 cm to 4 cm in width per chip, the wood powders being particles of wood ranging in size from 0.2 mm to 1 mm and the sawdust being particles of wood having a size ranging from 1 mm to 5 mm.

12. Insecticidal, in particular termicidal, composition **characterized in that** it contains at least one extract of wood according to one of claims 8 to 10.

13. Process for the preparation of an extract according to one of claims 8 to 10, or of an extract included in a composition according to claim 12, **characterized in that** it comprises the following stages:
• extraction from by-products of wood sawing, such as lumps, chips, powders and/or sawdust originating from the genus *Aniba,* and in particular from the species *parviflora* (*Aniba parviflora*), and optionally from woods not affecting the insecticidal properties of woods from the genus *Aniba,* and in particular improving the repellent effect of woods from the genus *Aniba,* such as woods from the genus *Ocotea,* and in particular from the species *rubra* (*Ocotea rubra*), the lumps of wood being pieces or fragments of wood having a size ranging from 0.5 cm to 15 cm in thickness, from 5 cm to 200 cm in length and from 4 cm to 20 cm in width per lump, the wood chips being fragments of wood ranging in size from 0.5 mm to 5 mm in thickness, from 0.5 cm to 5 cm in length and from 0.5 cm to 4 cm in width per chip, the wood powders being particles of wood ranging in size from 0.2 mm to 1 mm and the sawdust being particles of wood having a size ranging from 1 mm to 5 mm,
using at least one polar or non-polar solvent, said polar solvent having in particular a polarity ranging from 3.5 to 9 (established according to the standards defined in "Godfrey, Norman B. "Solvent Selection via Miscibility Number", CHEMTECH, 359-363 (1972)"), and in particular chosen from the group constituted by:
- alcohols having from 1 to 8 carbon atoms, such as ethanol, propanol, butanol, benzyl alcohol, methoxyethanol or their mixtures, and in particular methanol,
- ketones having from 1 to 7 carbon atoms, and in particular acetone, methyl ethyl ketone, cyclohexanone or their mixtures,
- alkyl acetates having from 1 to 6 carbon atoms and in particular the methyl and ethyl acetates or their mixtures,
- ethylene chloride, tetrahydrofuran, nitrobenzene, benzonitrile, p-dioxan, pyridine, nitroethane, acetonitrile, acetic acid, dimethylformamide, formamide, dimethylsulphoxide, water or their mixtures,
- or a mixture of at least 2 of the abovementioned solvents,
said non-polar solvent being chosen in particular from the group constituted by pentane, dichloromethane, benzene, hexane, toluene or their mixture
for a time varying from 10 minutes to 36 hours, at a temperature varying from 10°C to 80°C in order to obtain a mixture comprising by-products of wood sawing,
• the by-products of wood sawing are eliminated from the mixture obtained in the preceding stage, in particular by filtration, in order to obtain the extract of the invention,
• the extract obtained in the preceding stage is optionally evaporated in order to obtain a dry or concentrated extract.

14. Support impregnated with an extract according to claims 8 to 10, or with a composition according to one of claims 11 or 12, **characterized in that** it contains cellulose, and is in particular chosen from the group constituted by wood such as conifers (for example Norway pine, pinaster), hardwoods (for example poplar), paper, the ethers or cellulose esters such as methylcellulose, hydroxypropylmethylcellulose and hydroxybutylmethylcellulose, or **in that** it contains plastics such as polypropylene, polyurethane, polyethylene, polyvinyl chloride, and **characterized in that** it is impregnated with a quantity of extract originating from a quantity of wood greater than one-tenth of the quantity of support, and in particular a quantity of extract originating from a quantity of wood varying from one-tenth to 100 times the quantity of support.

15. Use of an extract according to one of claims 8 to 10, or of a composition according to one of claims 11 or 12, in an appropriate form for spray-application.
